(19) Europäisches Patentamt
European Patent Office
Office européen des brevets

(11) Veröffentlichungsnummer: **0 230 260 B1**

# (12) EUROPÄISCHE PATENTSCHRIFT

(45) Veröffentlichungstag der Patentschrift: **27.12.90**

(51) Int. Cl.[5]: **C07C 323/22**, C07C 323/29, C07C 317/28, A01N 35/10, A01N 41/10

(21) Anmeldenummer: **87100392.7**

(22) Anmeldetag: **14.01.87**

## (54) Cyclohexenonderivate, Verfahren zu ihrer Herstellung und ihre Verwendung als herbizide und das Pflanzenwachstum regulierende Mittel.

(30) Priorität: **18.01.86 DE 3601368**

(43) Veröffentlichungstag der Anmeldung: **29.07.87 Patentblatt 87/31**

(45) Bekanntmachung des Hinweises auf die Patenterteilung: **27.12.90 Patentblatt 90/52**

(84) Benannte Vertragsstaaten: **AT BE CH DE FR GB IT LI NL SE**

(56) Entgegenhaltungen: **EP-A- 0 099 535**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Keil, Michael, Dr., Fontanestrasse 4, D-6713 Freinsheim(DE)**
Erfinder: **Spiegler, Wolfgang, Dr., Westpreussenstrasse 5, D-6520 Worms 27(DE)**
Erfinder: **Jahn, Dieter, Dr., Burgunder Weg 8, D-6803 Edingen-Neckarhausen(DE)**
Erfinder: **Kolassa, Dieter, Dr., Moltkestrasse 8, D-6700 Ludwigshafen(DE)**
Erfinder: **Schirmer, Ulrich, Dr., Berghalde 79, D-6900 Heidelberg(DE)**
Erfinder: **Würzer, Bruno, Dr., Rüdigerstrasse 13, D-6701 Otterstadt(DE)**
Erfinder: **Meyer, Norbert, Dr., Dossenheimer Weg 22, D-6802 Ladenburg(DE)**
Erfinder: **Rademacher, Wilhelm, Dr., Austrasse 1, D-6703 Limburgerhof(DE)**
Erfinder: **Jung, Johann, Prof. Dr., Hardenburgstrasse 19, D-6703 Limburgerhof(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 230 260 B1

## Beschreibung

Die Erfindung betrifft neue Cyclohexenonderivate, Verfahren zu ihrer Herstellung, herbizide und das Pflanzenwachstum regulierende Mittel, die die neuen Wirkstoffe enthalten und Verfahren zur Bekämpfung von unerwünschtem Pflanzenwachstum sowie zur Regulierung von Pflanzenwachstum.

Die herbizide Wirkung von 3-Hydroxycyclohex-2-en-1-on-derivaten mit Alkylthioalkyl-Substituenten in 5-Stellung ist bekannt (DE-A-2 822 3O4 und DE-A-3 227 389). Ähnliche Derivate mit Alkylresten in 5-Stellung, die in beliebiger Position zwei Schwefelatome aufweisen, sind in der DE-A-32 27 332 beschrieben.

Es ist weiterhin bekannt, daß bestimmte 2-Acyl-3-hydroxycyclohex-2-en-1--one regulierend in das Pflanzenwachstum eingreifen (EP-A-123 OO1, EP-A-126 713).

Es wurden nun neue Cyclohexenonderivate der Formel I

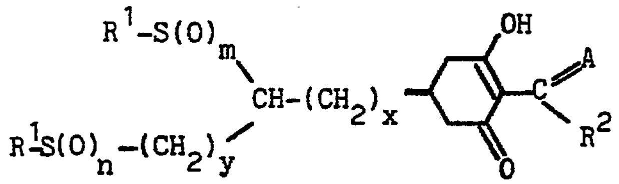 (I),

in der

$R^1$ $C_1$-$C_{18}$-Alkyl, $C_3$-$C_6$-Alkoxyalkyl, $C_3$-$C_6$-Alkylthioalkyl, $C_3$-$C_6$-Di-alkylaminoalkyl, $C_3$-$C_6$-Alkenyl oder $C_3$-$C_6$-Alkinyl,

$R^2$ $C_1$-$C_4$-Alkyl

A Sauerstoff oder den Rest $NOR^3$, wobei $R^3$ für $C_1$-$C_4$-Alkyl, $C_3$-$C_4$-Alkenyl, $C_3$-$C_4$-Alkinyl, $C_2$-$C_4$-Halogenalkyl, $C_2$-$C_4$-Halogenalkenyl oder $C_2$-$C_4$-Alkoxyalkyl steht,

m und n gleich oder verschieden sind und unabhängig voneinander jeweils O, 1 oder 2 und

x und y gleich oder verschieden sind und unabhängig voneinander jeweils O oder 1 bedeuten sowie Salze dieser Verbindungen gefunden.

Cyclohexenonderivate der Formel I, in der A für den Rest $NOR^3$ steht besitzen eine vorteilhafte herbizide Wirksamkeit vorzugsweise gegen Arten aus der Familie der Gräser (Gramineen).

Diejenigen Cyclohexenonderivate der Formel I, in der A für Sauerstoff steht sowie Salze dieser Verbindungen zeichnen sich durch vorteilhafte wachstumsregulierende Eigenschaften sowie durch eine gute Pflanzenverträglichkeit aus.

Die Verbindungen der Formel I können in mehreren tautomeren Formen auftreten, die alle vom Patentanspruch umfaßt werden. Beispielsweise können die Verbindungen mit A = $NOR^3$ u.a. folgende tautomere Strukturelemente aufweisen:

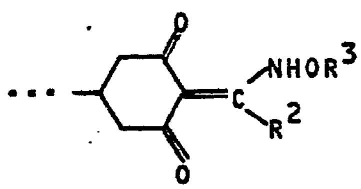

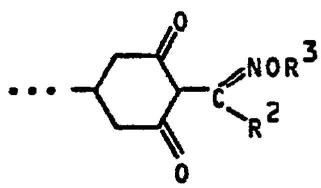

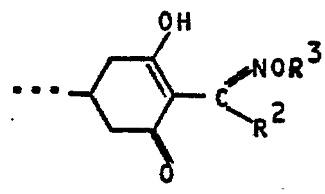

Die in den Resten $R^1$, $R^2$ und $R^3$ aufgeführten Alkylgruppen können jeweils geradkettig oder verzweigt sein.

Wenn $R^3$ $C_2$-$C_4$-Halogenalkyl oder -alkenyl bedeutet, sollen diese Reste 1 bis 3 Halogenatome aufweisen. Weiterhin sind für den Fall, daß $R^3$ $C_3$-$C_4$-Alkenyl oder $C_2$-$C_4$-Halogenalkenyl bedeutet, bei denjenigen Resten, bei denen E- und Z-Isomere auftreten können, beide Isomere vom Anspruch umfaßt.

$R^1$ in Formel I bedeutet z.B. Methyl, Ethyl, Propyl, Isopropyl, Butyl, Isobutyl, tert-Butyl, Pentyl, 2-Methylbutyl, Hexyl, 2-Methylpentyl, Heptyl, Octyl, 2-Ethylenhexyl, Isooctyl, Nonyl, Isononyl, Decyl, Isodecyl, 3,5,5,7-Tetramethylnonyl, Isotridecyl, Pentadecyl, Hexadecyl, Octadecyl, 2-Methoxyethyl, 2-Ethoxyethyl, 3-Methoxypropyl, 2-Ethoxybutyl, 2-Ethylthioethyl, 2-Ethylthiopropyl, 2-(Dimethylamino)ethyl, Allyl, (E)-But-2-en-1-yl, 2-Methyl-isoprop-2-en-1-yl oder Propargyl. (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann, Enzyklopädie der Technischen Chemie, 4. Auflage, Band 7, Seiten 216 und 217 sowie Band 11, Seiten 435 und 436).

$R^2$ in Formel I bedeutet beispielsweise Methyl, Ethyl, Propyl, Isopropyl, Butyl, sec-Butyl, Isobutyl oder tert-Butyl.

Für den Fall, daß in Formel I A für die Gruppe $NOR^3$ steht, bedeutet $R^3$ beispielsweise Methyl, Ethyl, Propyl, Allyl, (E)-But-2-en-1-yl, Propargyl, 2-Fluorethyl, 2-Chlorethyl, (E)-1-Chlorprop-1-en-3-yl, 1,1,2-Trichlorprop-1-en-3-yl, Methoxymethyl oder Methoxyethyl.

Bevorzugt sind Cyclohexenonderivate der Formel I, in der $R^1$ Ethyl, $R^2$ Ethyl oder Propyl, A Sauerstoff oder den Rest $NOR^3$, wobei $R^3$ für Ethyl steht, und m, n, x und y jeweils O bedeuten.

Als Salze der Verbindungen der Formel I kommen landwirtschaftlich brauchbare Salze, beispielsweise die Alkalimetallsalze, insbesondere die Kalium- oder Natriumsalze, Erdalkalimetallsalze, insbesondere Calcium- und Magnesiumsalze, Mangan-, Kupfer-, Zink- oder Eisensalze sowie Ammonium-, Sulfonium-, Sulfoxonium- und Phosphoniumsalze, beispielsweise Ammonium-, Tetraalkylammonium-, Benzyltrialkylammonium-, Trialkylsulfonium- oder Trialkylsulfoxoniumsalze in Betracht.

Die Cyclohexenonderivate der Formel I, in der A für den Rest $NOR^3$ steht, können vorteilhaft durch Umsetzung von Cyclohexenonderivaten der Formel I, in der A für Sauerstoff steht, mit einer Ammoniumverbindung der Formel $R^3O\text{-}NH_3Y$, in der $R^3$ die obengenannte Bedeutung hat und Y für ein Anion, beispielsweise für ein Halogenid, wie Fluorid, Chlorid, Bromid oder Jodid, für Carbonat oder für Sulfat steht, erhalten werden.

Die Reaktion mit der Ammoniumverbindung führt man zweckmäßig in heterogener Phase in einem inerten Verdünnungsmittel bei einer Temperatur von O bis 8O°C oder von O°C bis zum Siedepunkt des Reaktionsgemisches in Gegenwart einer Base durch. Geeignete Basen sind beispielsweise die Carbonate, Hydrogencarbonate, Acetate, Alkanolate, Hydroxide oder Oxide von Alkali-oder Erdalkalimetallen, insbesondere von Natrium, Kalium, Magnesium oder Calcium. Außerdem können auch organische Basen, wie Pyridin oder tertiäre Amine, Verwendung finden.

Als inerte Verdünnungsmittel für diesen Reaktionsschritt sind beispielsweise Dimethylsulfoxid; Alkohole, wie Methanol, Ethanol oder Isopropanol; gegebenenfalls chlorierte Kohlenwasserstoffe, wie Chloroform, Dichlorethan, Hexan, Cyclohexan, Benzol oder Toluol; Carbonsäureester, wie Essigsäureethylester; oder Ether, wie Dioxan oder Tetrahydrofuran geeignet.

Die Umsetzung ist nach wenigen Stunden beendet. Das Reaktionsprodukt kann dann durch Einengen der Mischung, Zugabe von Wasser und Extraktion mit einem unpolaren Lösungsmittel, wie Methylenchlorid und Abdestillieren des Lösungsmittels unter vermindertem Druck isoliert werden.

Anstelle mit einer Ammoniumverbindung können die Verbindungen der Formel I (mit A = Sauerstoff) auch mit einem Hydroxylamin der Formel $R^3O\text{-}NH_2$, in der $R^3$ die obengenannte Bedeutung hat, in inerten Verdünnungsmitteln bei einer Temperatur von O°C bis zum Siedepunkt des Reaktionsgemisches, insbesondere von 15 bis 7O°C, umgesetzt werden. Gegebenenfalls kann das Hydroxylamin als wäßrige Lösung eingesetzt werden. Je nach dem verwendeten Lösungsmittel für den anderen Reaktionsteilnehmer erhält man ein ein- oder zweiphasiges Reaktionsgemisch.

Geeignete Lösungsmittel für diese Umsetzung sind beispielsweise Alkohole, wie Methanol, Ethanol, Isopropanol oder Cyclohexanol; gegebenenfalls chlorierte Kohlenwasserstoffe, wie Hexan, Cyclohexan, Methylenchlorid, Toluol oder Dichlorethan; Carbonsäureester, wie Essigsäureethylester; Nitrile, wie Acetonitril; oder cyclische Ether, wie Tetrahydrofuran.

Die oben genannten Alkalimetallsalze der Cyclohexenonderivate der Formel I können durch Behandeln dieser Verbindungen mit Natrium- oder Kaliumhydroxid in wäßriger Lösung oder in einem organischen Lösungsmittel, wie Methanol, Ethanol oder Aceton, erhalten werden. Auch Natrium- und Kaliumalkanolate können als Basen dienen.

Die anderen Metallsalze, z.B. die Mangan-, Kupfer-, Zink-, Eisen-, Calcium- und Magnesiumsalze können aus den Natriumsalzen durch Umsetzung mit den entsprechenden Metallchloriden in wäßriger Lösung hergestellt werden. Die Ammonium-, Sulfonium-, Sulfoxonium- und Phosphoniumsalze lassen sich aus den neuen Verbindungen der Formel I mittels Ammonium-, Sulfonium-, Sulfoxonium- oder Phosphoniumhydroxiden gegebenenfalls in wäßriger Lösung herstellen.

Die neuen Cyclohexenonderivate der Formel I (mit A = Sauerstoff) werden durch Umsetzung eines Cyclohexandionderivats der Formel II

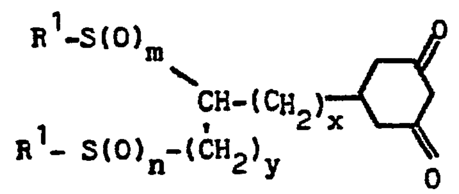

(II),

in der $R^1$, m, n, x und y die oben genannte Bedeutung besitzen, mit einem Säurechlorid der Formel $R^2\text{-}COCl$, in der $R^2$ die oben genannte Bedeutung besitzt, in einem inerten Lösungsmittel (z.B. Tetrahydrofuran) in Gegenwart einer Base (z.B. Triethylamin) und sich anschließender Behandlung mit einer Imidazol- oder Pyridinverbindung (z.B. 4-(N,N-Dimethylamino)-pyridin) erhalten.

Eine solche Arbeitsweise ist an sich bekannt und in der JP-A-63 O52/1979 beschrieben.

Es ist aber auch möglich, andere an sich bekannte Synthesemethoden, wie sie beispielsweise in Tetrahedron Letters 29, 2491 (1975) beschrieben sind, anzuwenden.

Zu den Verbindungen der Formel II gelangt man ebenfalls nach literaturbekannten Verfahren, wie dies aus folgendem Schema hervorgeht:

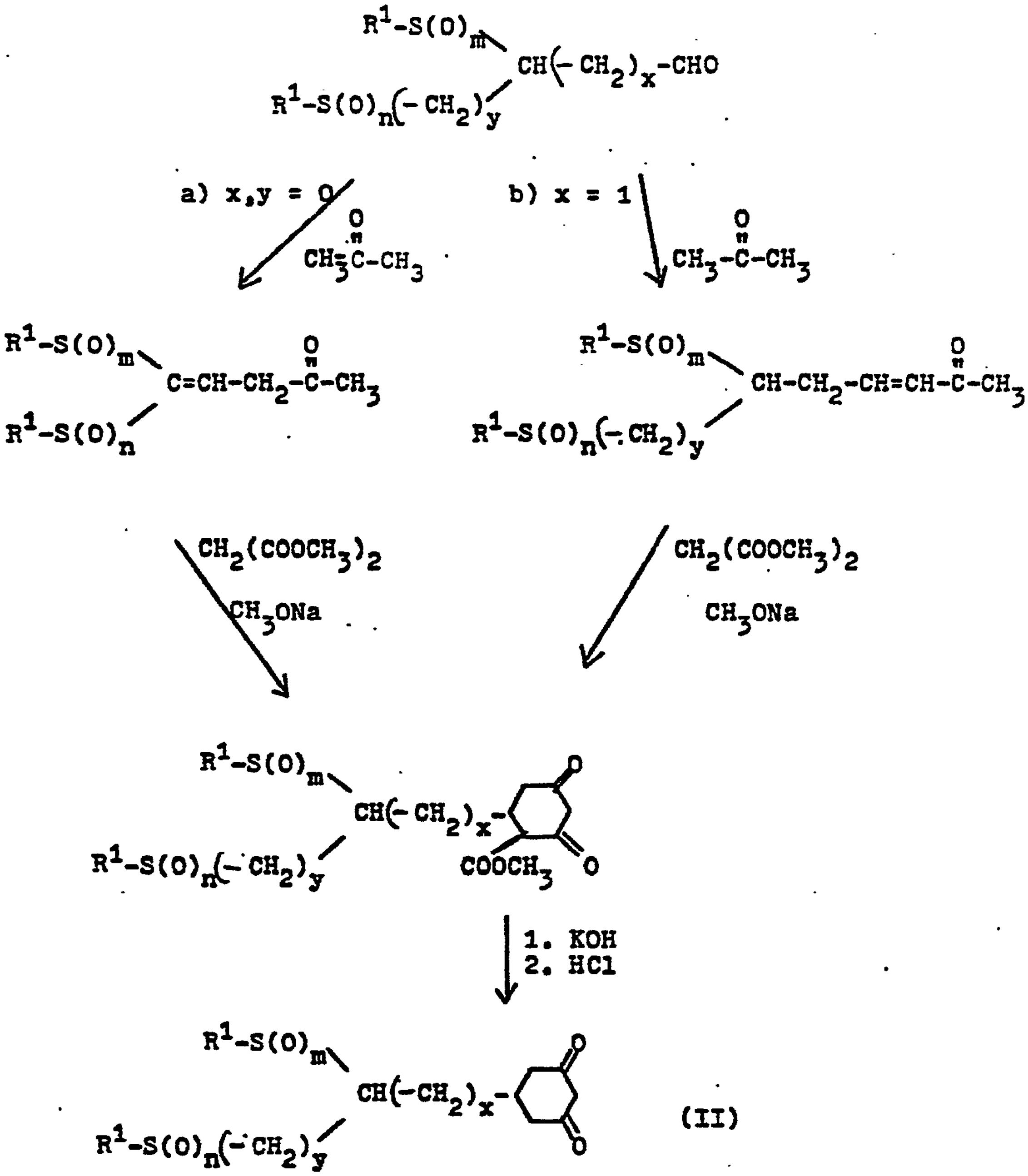


(II)

Die als Ausgangsverbindungen erforderlichen Aldehyde lassen sich beispielsweise nach den folgenden Methoden herstellen:

Methode A:

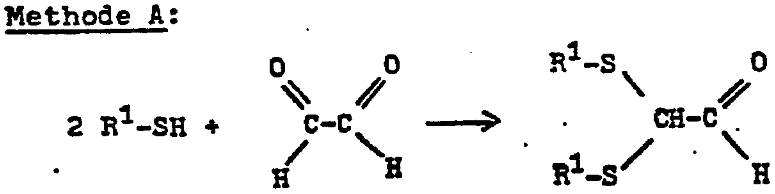

Methode B:

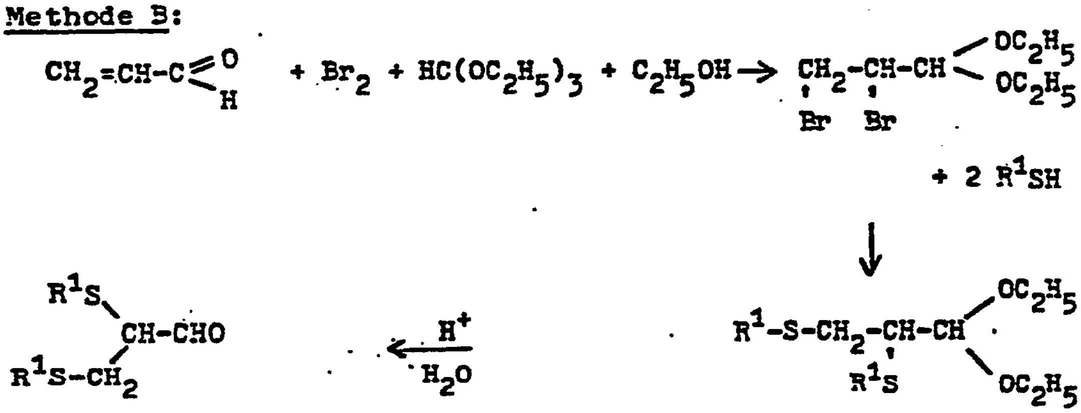


Methode C:

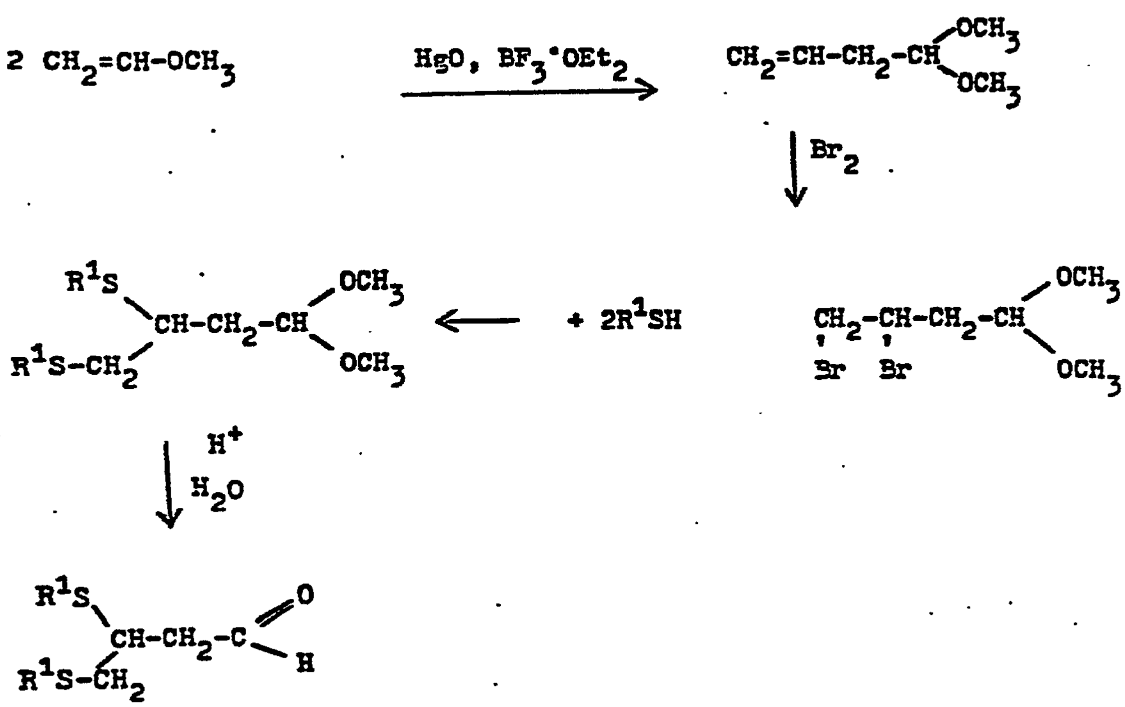


Diejenigen Verbindungen der Formel I, in denen m und n 1 oder 2 bedeuten, können auch durch Oxidation der entsprechenden Vorstufen, in denen der Schwefel eine niedrigere Oxidationsstufe besitzt (m, n = O), erhalten werden. Oxidationsmittel sind beispielsweise Sauerstoff, Ozon, Verbindungen mit Peroxidstruktur z.B. Wasserstoffperoxid, Persäuren oder Hydroperoxide), Halogene, anorganische Halogenverbindungen (z.B. Hypochlorit oder Chlorat), Stickstoffverbindungen (z.B. Salpetersäure oder Distickstoffpentoxid) oder Salze von Metallen höherer Wertigkeit (z.B. Blei-, Wismut-, Vanadin-,

Mangan-, Chrom- oder Kobaltsalze). Auch die anodische Oxidation ist möglich. Die Oxidation kann nicht nur auf der Endstufe (d.h. bei Verbindungen der Formel I) durchgeführt werden, sondern ist prinzipiell auf jeder Stufe des vorstehend beschriebenen Syntheseweges möglich.

Die noch folgenden Beispiele sollen die Erfindung näher erläutern.

Beispiel 1

2,4 g 2-Butyryl-5-[bis(ethylthio)methyl]-3-hydroxy-cyclohex-2-en-1-on, O,74 g Ethoxyammoniumchlorid, O,64 g Natriumhydrogencarbonat und 3O ml Methanol wurden bei Raumtemperatur 16 Stunden lang gerührt. Das Lösungsmittel wurde unter vermindertem Druck abdestilliert, zum verbleibenden Rückstand wurden jeweils 5O ml Wasser und Dichlormethan gegeben. Nach heftigem Rühren wurden die Phasen getrennt und die organische Phase über Natriumsulfat getrocknet. Nach Abdestillieren des Lösungsmittels unter vermindertem Druck erhielt man 2,3 g 5-[Bis(ethylthio)methyl]-2-(1-ethoxyiminobutyl)-3-hydroxy-cyclohex-2-en-1 -on als Öl.

Die in den nachfolgenden Tabellen 1 bis 4 enthaltenen Verbindungen können in analoger Weise oder nach einer der in der Beschreibung aufgeführten Arbeitsweisen erhalten werden.

Tabelle 1

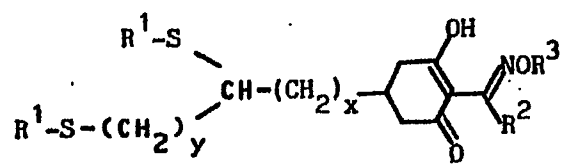

| Verbindung Nr. | $R^1$ | $R^2$ | $R^3$ | x | y |
|---|---|---|---|---|---|
| 1 | Methyl | Ethyl | Ethyl | 0 | 0 |
| 2 | Methyl | Ethyl | Ethyl | 0 | 1 |
| 3 | Methyl | Ethyl | Ethyl | 1 | 0 |
| 4 | Methyl | Ethyl | Ethyl | 1 | 1 |
| 5 | Methyl | Ethyl | Allyl | 0 | 0 |
| 6 | Methyl | Ethyl | Allyl | 0 | 1 |
| 7 | Methyl | Ethyl | Allyl | 1 | 0 |
| 8 | Methyl | Ethyl | Allyl | 1 | 1 |
| 9 | Methyl | Ethyl | (E)-But-2-en-1-yl | 0 | 0 |
| 10 | Methyl | Ethyl | (E)-But-2-en-1-yl | 0 | 1 |
| 11 | Methyl | Ethyl | (E)-But-2-en-1-yl | 1 | 0 |
| 12 | Methyl | Ethyl | (E)-But-2-en-1-yl | 1 | 1 |
| 13 | Methyl | Ethyl | (E)-1-Chlorprop-1-en-3-yl | 0 | 0 |
| 14 | Methyl | Ethyl | (E)-1-Chlorprop-1-en-3-yl | 0 | 1 |
| 15 | Methyl | Ethyl | (E)-1-Chlorprop-1-en-3-yl | 1 | 0 |
| 16 | Methyl | Ethyl | (E)-1-Chlorprop-1-en-3-yl | 1 | 1 |
| 17 | Methyl | Ethyl | Propargyl | 0 | 0 |
| 18 | Methyl | Ethyl | 2-Fluorethyl | 0 | 0 |

Tabelle 1 - Fortsetzung -

| Verbindung Nr. | $R^1$ | $R^2$ | $R^3$ | x | y |
|---|---|---|---|---|---|
| 19 | Methyl | Ethyl | Methoxymethyl | 0 | 0 |
| 20 | Methyl | n-Propyl | Ethyl | 0 | 0 |
| 21 | Methyl | n-Propyl | Ethyl | 0 | 1 |
| 22 | Methyl | n-Propyl | Ethyl | 1 | 0 |
| 23 | Methyl | n-Propyl | Ethyl | 1 | 1 |
| 24 | Methyl | n-Propyl | n-Propyl | 0 | 0 |
| 25 | Methyl | n-Propyl | n-Propyl | 1 | 1 |
| 26 | Methyl | n-Propyl | Allyl | 0 | 0 |
| 27 | Methyl | n-Propyl | Allyl | 1 | 1 |
| 28 | Methyl | n-Propyl | (E)-But-2-en-1-yl | 0 | 0 |
| 29 | Methyl | n-Propyl | (E)-But-2-en-1-yl | 0 | 1 |
| 30 | Methyl | n-Propyl | (E)-But-2-en-1-yl | 1 | 0 |
| 31 | Methyl | n-Propyl | (E)-But-2-en-1-yl | 1 | 1 |
| 32 | Methyl | n-Propyl | (E)-1-Chlorprop-1-en-3-yl | 0 | 0 |
| 33 | Methyl | n-Propyl | (E)-1-Chlorprop-1-en-3-yl | 0 | 1 |
| 34 | Methyl | n-Propyl | (E)-1-Chlorprop-1-en-3-yl | 1 | 0 |
| 35 | Methyl | n-Propyl | (E)-1-Chlorprop-1-en-3-yl | 1 | 1 |
| 36 | Methyl | n-Propyl | 1,1,2-Trichlorprop1-en-3-yl | 0 | 0 |
| 37 | Ethyl | Methyl | Ethyl | 0 | 0 |
| 38 | Ethyl | Methyl | Ethyl | 1 | 1 |
| 39 | Methyl | n-Propyl | Propargyl | 0 | 0 |
| 40 | Ethyl | Ethyl | Ethyl | 0 | 0 |

**Tabelle 1** - Fortsetzung -

| Verbindung Nr. | $R^1$ | $R^2$ | $R^3$ | x | y |
|---|---|---|---|---|---|
| 41 | Ethyl | Ethyl | Ethyl | 1 | 1 |
| 42 | Ethyl | Ethyl | Propyl | 0 | 0 |
| 43 | Ethyl | Ethyl | Propyl | 1 | 1 |
| 44 | Ethyl | Ethyl | Allyl | 0 | 0 |
| 45 | Ethyl | Ethyl | Allyl | 0 | 1 |
| 46 | Ethyl | Ethyl | Allyl | 1 | 0 |
| 47 | Ethyl | Ethyl | Allyl | 1 | 1 |
| 48 | Ethyl | Ethyl | (E)-But-2-en-1-yl | 0 | 0 |
| 49 | Ethyl | Ethyl | (E)-But-2-en-1-yl | 0 | 1 |
| 50 | Ethyl | Ethyl | (E)-But-2-en-1-yl | 1 | 0 |
| 51 | Ethyl | Ethyl | (E)-But-2-en-1-yl | 1 | 1 |
| 52 | Ethyl | Ethyl | (E)-1-Chlorprop-1-en-3-yl | 0 | 0 |
| 53 | Ethyl | Ethyl | (E)-1-Chlorprop-1-en-3-yl | 0 | 1 |
| 54 | Ethyl | Ethyl | (E)-1-Chlorprop-1-en-3-yl | 1 | 0 |
| 55 | Ethyl | Ethyl | (E)-1-Chlorprop-1-en-3-yl | 1 | 1 |
| 56 | Ethyl | Ethyl | Propargyl | 0 | 0 |
| 57 | Ethyl | n-Propyl | Ethyl | 0 | 0 |
| 58 | Ethyl | n-Propyl | Ethyl | 0 | 1 |
| 59 | Ethyl | n-Propyl | Ethyl | 1 | 0 |
| 60 | Ethyl | n-Propyl | Ethyl | 1 | 1 |
| 61 | Ethyl | n-Propyl | Allyl | 0 | 0 |
| 62 | Ethyl | n-Propyl | Allyl | 1 | 1 |
| 351 | Ethyl | n-Butyl | Ethyl | 0 | 0 |

**Tabelle 1** - Fortsetzung -

| Verbindung Nr. | $R^1$ | $R^2$ | $R^3$ | x | y |
|---|---|---|---|---|---|
| 63 | Ethyl | n-Propyl | 2-Chlorethyl | 0 | 0 |
| 64 | Ethyl | n-Propyl | 2-Chlorethyl | 1 | 1 |
| 65 | Ethyl | n-Propyl | 1,1,2-Trichlorprop-1-en-3-yl | 0 | 0 |
| 66 | Ethyl | n-Propyl | Methyl | 0 | 0 |
| 67 | Ethyl | n-Propyl | n-Propyl | 0 | 0 |
| 68 | Ethyl | n-Propyl | n-Propyl | 0 | 1 |
| 69 | Ethyl | n-Propyl | n-Propyl | 1 | 0 |
| 70 | Ethyl | n-Propyl | n-Propyl | 1 | 1 |
| 71 | Ethyl | n-Propyl | (E)-But-2-en-1-yl | 0 | 0 |
| 72 | Ethyl | n-Propyl | (E)-But-2-en-1-yl | 0 | 1 |
| 73 | Ethyl | n-Propyl | (E)-But-2-en-1-yl | 1 | 0 |
| 74 | Ethyl | n-Propyl | (E)-But-2-en-1-yl | 1 | 1 |
| 75 | Ethyl | n-Propyl | (E)-1-Chlorprop-1-en-3-yl | 0 | 0 |
| 76 | Ethyl | n-Propyl | (E)-1-Chlorprop-1-en-3-yl | 0 | 1 |
| 77 | Ethyl | n-Propyl | (E)-1-Chlorprop-1-en-3-yl | 1 | 0 |
| 78 | Ethyl | n-Propyl | (E)-1-Chlorprop-1-en-3-yl | 1 | 1 |
| 79 | Ethyl | n-Propyl | Propargyl | 0 | 0 |
| 80 | Ethyl | n-Propyl | Methoxymethyl | 0 | 0 |
| 81 | n-Propyl | Ethyl | Ethyl | 0 | 0 |
| 82 | n-Propyl | Ethyl | Ethyl | 0 | 1 |
| 83 | n-Propyl | Ethyl | Ethyl | 1 | 0 |
| 84 | n-Propyl | Ethyl | Ethyl | 1 | 1 |

Tabelle 1 - Fortsetzung -

| Verbindung Nr. | $R^1$ | $R^2$ | $R^3$ | x | y |
|---|---|---|---|---|---|
| 85 | n-Propyl | Ethyl | n-Propyl | 0 | 0 |
| 86 | n-Propyl | Ethyl | n-Propyl | 1 | 1 |
| 87 | n-Propyl | Ethyl | Allyl | 0 | 0 |
| 88 | n-Propyl | Ethyl | Allyl | 1 | 1 |
| 89 | n-Propyl | Ethyl | (E)-But-2-en-1-yl | 0 | 0 |
| 90 | n-Propyl | Ethyl | (E)-But-2-en-1-yl | 0 | 1 |
| 91 | n-Propyl | Ethyl | (E)-But-2-en-1-yl | 1 | 0 |
| 92 | n-Propyl | Ethyl | (E)-But-2-en-1-yl | 1 | 1 |
| 93 | n-Propyl | Ethyl | (E)-1-Chlorprop-1-en-3-yl | 0 | 0 |
| 94 | n-Propyl | Ethyl | (E)-1-Chlorprop-1-en-3-yl | 0 | 1 |
| 95 | n-Propyl | Ethyl | (E)-1-Chlorprop-1-en-3-yl | 1 | 0 |
| 96 | n-Propyl | Ethyl | (E)-1-Chlorprop-1-en-3-yl | 1 | 1 |
| 97 | n-Propyl | Ethyl | Methoxymethyl | 0 | 0 |
| 98 | n-Propyl | n-Propyl | Ethyl | 0 | 0 |
| 99 | n-Propyl | n-Propyl | Ethyl | 0 | 1 |
| 100 | n-Propyl | n-Propyl | Ethyl | 1 | 0 |
| 101 | n-Propyl | n-Propyl | Ethyl | 1 | 1 |
| 102 | n-Propyl | n-Propyl | Allyl | 0 | 0 |
| 103 | n-Propyl | n-Propyl | Allyl | 1 | 1 |
| 104 | n-Propyl | n-Propyl | (E)-But-2-en-1-yl | 0 | 0 |
| 105 | n-Propyl | n-Propyl | (E)-But-2-en-1-yl | 1 | 1 |
| 106 | n-Propyl | n-Propyl | (E)-1-Chlorprop-1-en-3-yl | 0 | 0 |

Tabelle 1 - Fortsetzung -

| Verbindung Nr. | $R^1$ | $R^2$ | $R^3$ | x | y |
|---|---|---|---|---|---|
| 107 | n-Propyl | n-Propyl | (E)-1-Chlorprop-1-en-3-yl | 0 | 1 |
| 108 | n-Propyl | n-Propyl | (E)-1-Chlorprop-1-en-3-yl | 1 | 0 |
| 109 | n-Propyl | n-Propyl | (E)-1-Chlorprop-1-en-3-yl | 1 | 1 |
| 110 | n-Butyl | Ethyl | Ethyl | 0 | 0 |
| 111 | n-Butyl | Ethyl | Ethyl | 1 | 1 |
| 112 | n-Butyl | Ethyl | Allyl | 0 | 0 |
| 113 | n-Butyl | Ethyl | Allyl | 1 | 1 |
| 114 | n-Butyl | Ethyl | n-Propyl | 0 | 0 |
| 115 | n-Pentyl | Ethyl | Ethyl | 0 | 0 |
| 116 | n-Pentyl | Ethyl | Ethyl | 1 | 1 |
| 117 | n-Pentyl | Ethyl | Allyl | 0 | 0 |
| 118 | n-Pentyl | Ethyl | Allyl | 1 | 1 |
| 119 | n-Pentyl | Ethyl | (E)-But-2-en-1-yl | 0 | 0 |
| 120 | n-Pentyl | Ethyl | (E)-But-2-en-1-yl | 0 | 1 |
| 121 | n-Pentyl | Ethyl | (E)-But-2-en-1-yl | 1 | 0 |
| 122 | n-Pentyl | Ethyl | (E)-But-2-en-1-yl | 1 | 1 |
| 123 | n-Pentyl | Ethyl | (E)-1-Chlorprop-1-en-3-yl | 0 | 0 |
| 124 | n-Pentyl | Ethyl | (E)-1-Chlorprop-1-en-3-yl | 0 | 1 |
| 125 | n-Pentyl | Ethyl | (E)-1-Chlorprop-1-en-3-yl | 1 | 0 |
| 126 | n-Pentyl | Ethyl | (E)-1-Chlorprop-1-en-3-yl | 1 | 1 |
| 127 | n-Pentyl | n-Propyl | Ethyl | 0 | 0 |
| 128 | n-Pentyl | n-Propyl | Ethyl | 1 | 1 |

Tabelle 1 - Fortsetzung -

| Verbindung Nr. | $R^1$ | $R^2$ | $R^3$ | x | y |
|---|---|---|---|---|---|
| 129 | n-Pentyl | n-Propyl | Allyl | 0 | 0 |
| 130 | n-Pentyl | n-Propyl | Allyl | 1 | 1 |
| 131 | n-Decyl | Ethyl | Ethyl | 1 | 0 |
| 132 | n-Decyl | Ethyl | Ethyl | 1 | 1 |
| 133 | n-Decyl | Ethyl | Allyl | 0 | 0 |
| 134 | n-Decyl | Ethyl | Allyl | 1 | 1 |
| 135 | n-Octadecyl | Ethyl | Ethyl | 0 | 0 |
| 136 | n-Octadecyl | Ethyl | Ethyl | 1 | 1 |
| 137 | n-Octadecyl | Ethyl | Allyl | 0 | 0 |
| 138 | n-Octadecyl | Ethyl | Allyl | 1 | 1 |
| 139 | n-Octadecyl | n-Propyl | Ethyl | 0 | 0 |
| 140 | n-Octadecyl | n-Propyl | Ethyl | 1 | 1 |
| 141 | n-Octadecyl | n-Propyl | Allyl | 0 | 0 |
| 142 | n-Octadecyl | n-Propyl | Allyl | 1 | 1 |
| 143 | Isopropyl | Ethyl | Ethyl | 0 | 0 |
| 144 | Isopropyl | Ethyl | Ethyl | 0 | 1 |
| 145 | Isopropyl | Ethyl | Ethyl | 1 | 0 |
| 146 | Isopropyl | Ethyl | Ethyl | 1 | 1 |
| 147 | Isopropyl | Ethyl | n-Propyl | 0 | 0 |
| 148 | Isopropyl | Ethyl | n-Propyl | 1 | 1 |
| 149 | Isopropyl | Ethyl | Allyl | 0 | 0 |
| 150 | Isopropyl | Ethyl | Allyl | 1 | 1 |

Tabelle 1 - Fortsetzung -

| Verbindung Nr. | $R^1$ | $R^2$ | $R^3$ | x | y |
|---|---|---|---|---|---|
| 151 | Isopropyl | Ethyl | (E)-But-2-en-1-yl | 0 | 0 |
| 152 | Isopropyl | Ethyl | (E)-But-2-en-1-yl | 0 | 1 |
| 153 | Isopropyl | Ethyl | (E)-But-2-en-1-yl | 1 | 0 |
| 154 | Isopropyl | Ethyl | (E)-But-2-en-1-yl | 1 | 1 |
| 155 | Isopropyl | Ethyl | (E)-1-Chlorprop-1-en-3-yl | 0 | 0 |
| 156 | Isopropyl | Ethyl | (E)-1-Chlorprop-1-en-3-yl | 0 | 1 |
| 157 | Isopropyl | Ethyl | (E)-1-Chlorprop-1-en-3-yl | 1 | 0 |
| 158 | Isopropyl | Ethyl | (E)-1-Chlorprop-1-en-3-yl | 1 | 1 |
| 159 | Isopropyl | n-Propyl | Ethyl | 0 | 0 |
| 160 | Isopropyl | n-Propyl | Ethyl | 0 | 1 |
| 161 | Isopropyl | n-Propyl | Ethyl | 1 | 0 |
| 162 | Isopropyl | n-Propyl | Ethyl | 1 | 1 |
| 163 | Isopropyl | n-Propyl | n-Propyl | 0 | 0 |
| 164 | Isopropyl | n-Propyl | n-Propyl | 1 | 1 |
| 165 | Isopropyl | n-Propyl | Allyl | 0 | 0 |
| 166 | Isopropyl | n-Propyl | Allyl | 1 | 1 |
| 167 | Isopropyl | n-Propyl | (E)-But-2-en-1-yl | 0 | 0 |
| 168 | Isopropyl | n-Propyl | (E)-But-2-en-1-yl | 0 | 1 |
| 169 | Isopropyl | n-Propyl | (E)-But-2-en-1-yl | 1 | 0 |
| 170 | Isopropyl | n-Propyl | (E)-But-2-en-1-yl | 1 | 1 |
| 171 | Isopropyl | n-Propyl | (E)-1-Chlorprop-1-en-3-yl | 0 | 0 |
| 172 | Isopropyl | n-Propyl | (E)-1-Chlorprop-1-en-3-yl | 0 | 1 |

<u>Tabelle 1</u> - Fortsetzung -

| Verbindung Nr. | $R^1$ | $R^2$ | $R^3$ | x | y |
|---|---|---|---|---|---|
| 173 | Isopropyl | n-Propyl | (E)-1-Chlorprop-1-en-3-yl | 1 | 0 |
| 174 | Isopropyl | n-Propyl | (E)-1-Chlorprop-1-en-3-yl | 1 | 1 |
| 175 | Isopropyl | n-Propyl | Propargyl | 0 | 0 |
| 176 | Isopropyl | n-Propyl | Propargyl | 0 | 1 |
| 177 | Isopropyl | n-Propyl | Propargyl | 1 | 0 |
| 178 | Isopropyl | n-Propyl | Propargyl | 1 | 1 |
| 179 | Isopropyl | n-Propyl | 2-Fluorethyl | 0 | 0 |
| 180 | Isopropyl | n-Propyl | 2-Fluorethyl | 0 | 1 |
| 181 | Isopropyl | n-Propyl | 2-Fluorethyl | 1 | 0 |
| 182 | Isopropyl | n-Propyl | 2-Fluorethyl | 1 | 1 |
| 183 | Isopropyl | n-Propyl | Methoxymethyl | 0 | 0 |
| 184 | Isopropyl | n-Propyl | Methoxymethyl | 0 | 1 |
| 185 | Isopropyl | n-Propyl | Methoxymethyl | 1 | 0 |
| 186 | Isopropyl | n-Propyl | Methoxymethyl | 1 | 1 |
| 187 | Isobutyl | Ethyl | Ethyl | 0 | 0 |
| 188 | Isobutyl | Ethyl | Ethyl | 0 | 1 |
| 189 | Isobutyl | Ethyl | Ethyl | 1 | 0 |
| 190 | Isobutyl | Ethyl | Ethyl | 1 | 1 |
| 191 | Isobutyl | n-Propyl | Ethyl | 0 | 0 |
| 192 | Isobutyl | n-Propyl | Ethyl | 1 | 1 |
| 193 | Isobutyl | n-Propyl | Allyl | 0 | 0 |
| 194 | Isobutyl | n-Propyl | Allyl | 1 | 1 |

Tabelle 1 - Fortsetzung -

| Verbindung Nr. | $R^1$ | $R^2$ | $R^3$ | x | y |
|---|---|---|---|---|---|
| 195 | tert-Butyl | Ethyl | Ethyl | 0 | 0 |
| 196 | tert-Butyl | Ethyl | Ethyl | 1 | 1 |
| 197 | tert-Butyl | Ethyl | Allyl | 0 | 0 |
| 198 | tert-Butyl | Ethyl | Allyl | 1 | 1 |
| 199 | tert-Butyl | Ethyl | (E)-But-2-en-1-yl | 0 | 0 |
| 200 | tert-Butyl | Ethyl | (E)-But-2-en-1-yl | 0 | 1 |
| 201 | tert-Butyl | Ethyl | (E)-But-2-en-1-yl | 1 | 0 |
| 202 | tert-Butyl | Ethyl | (E)-But-2-en-1-yl | 1 | 1 |
| 203 | tert-Butyl | Ethyl | (E)-1-Chlorprop-1-en-3-yl | 0 | 0 |
| 204 | tert-Butyl | Ethyl | (E)-1-Chlorprop-1-en-3-yl | 0 | 1 |
| 205 | tert-Butyl | Ethyl | (E)-1-Chlorprop-1-en-3-yl | 1 | 0 |
| 206 | tert-Butyl | Ethyl | (E)-1-Chlorprop-1-en-3-yl | 1 | 1 |
| 207 | tert-Butyl | n-Propyl | Ethyl | 0 | 0 |
| 208 | tert-Butyl | n-Propyl | Ethyl | 0 | 1 |
| 209 | tert-Butyl | n-Propyl | Ethyl | 1 | 0 |
| 210 | tert-Butyl | n-Propyl | Ethyl | 1 | 1 |
| 211 | tert-Butyl | n-Propyl | n-Propyl | 0 | 0 |
| 212 | tert-Butyl | n-Propyl | n-Propyl | 1 | 1 |
| 213 | tert-Butyl | n-Propyl | Allyl | 0 | 0 |
| 214 | tert-Butyl | n-Propyl | Allyl | 1 | 1 |
| 215 | tert-Butyl | n-Propyl | (E)-But-2-en-1-yl | 0 | 0 |
| 216 | tert-Butyl | n-Propyl | (E)-But-2-en-1-yl | 0 | 1 |

<u>Tabelle 1</u> - Fortsetzung -

| Verbindung Nr. | $R^1$ | $R^2$ | $R^3$ | x | y |
|---|---|---|---|---|---|
| 217 | tert-Butyl | n-Propyl | (E)-But-2-en-1-yl | 1 | 0 |
| 218 | tert-Butyl | n-Propyl | (E)-But-2-en-1-yl | 1 | 1 |
| 219 | tert-Butyl | n-Propyl | (E)-1-Chlorprop-1-en-3-yl | 0 | 0 |
| 220 | tert-Butyl | n-Propyl | (E)-1-Chlorprop-1-en-3-yl | 0 | 1 |
| 221 | tert-Butyl | n-Propyl | (E)-1-Chlorprop-1-en-3-yl | 1 | 0 |
| 222 | tert-Butyl | n-Propyl | (E)-1-Chlorprop-1-en-3-yl | 1 | 1 |
| 223 | Allyl | Ethyl | Ethyl | 0 | 0 |
| 224 | Allyl | Ethyl | Ethyl | 0 | 1 |
| 225 | Allyl | Ethyl | Ethyl | 1 | 0 |
| 226 | Allyl | Ethyl | Ethyl | 1 | 1 |
| 227 | Allyl | Ethyl | n-Propyl | 0 | 0 |
| 228 | Allyl | Ethyl | n-Propyl | 1 | 1 |
| 229 | Allyl | Ethyl | Allyl | 0 | 0 |
| 230 | Allyl | Ethyl | Allyl | 1 | 1 |
| 231 | Allyl | Ethyl | (E)-But-2-en-1-yl | 0 | 0 |
| 232 | Allyl | Ethyl | (E)-But-2-en-1-yl | 0 | 1 |
| 233 | Allyl | Ethyl | (E)-But-2-en-1-yl | 1 | 0 |
| 234 | Allyl | Ethyl | (E)-But-2-en-1-yl | 1 | 1 |
| 235 | Allyl | Ethyl | (E)-1-Chlorprop-1-en-3-yl | 0 | 0 |
| 236 | Allyl | Ethyl | (E)-1-Chlorprop-1-en-3-yl | 0 | 1 |
| 237 | Allyl | Ethyl | (E)-1-Chlorprop-1-en-3-yl | 1 | 0 |
| 238 | Allyl | Ethyl | (E)-1-Chlorprop-1-en-3-yl | 1 | 1 |

**Tabelle 1** - Fortsetzung -

| Verbindung Nr. | $R^1$ | $R^2$ | $R^3$ | x | y |
|---|---|---|---|---|---|
| 239 | Allyl | Ethyl | Propargyl | 0 | 0 |
| 240 | Allyl | Ethyl | Propargyl | 0 | 1 |
| 241 | Allyl | Ethyl | Propargyl | 1 | 0 |
| 242 | Allyl | Ethyl | Propargyl | 1 | 1 |
| 243 | Allyl | Ethyl | 2-Fluorethyl | 0 | 0 |
| 244 | Allyl | Ethyl | 2-Fluorethyl | 0 | 1 |
| 245 | Allyl | Ethyl | 2-Fluorethyl | 1 | 0 |
| 246 | Allyl | Ethyl | 2-Fluorethyl | 1 | 1 |
| 247 | Allyl | Ethyl | Methoxymethyl | 0 | 0 |
| 248 | Allyl | Ethyl | Methoxymethyl | 0 | 1 |
| 249 | Allyl | Ethyl | Methoxymethyl | 1 | 0 |
| 250 | Allyl | Ethyl | Methoxymethyl | 1 | 1 |
| 251 | Allyl | n-Propyl | Ethyl | 0 | 0 |
| 252 | Allyl | n-Propyl | Ethyl | 0 | 1 |
| 253 | Allyl | n-Propyl | Ethyl | 1 | 0 |
| 254 | Allyl | n-Propyl | Ethyl | 1 | 1 |
| 255 | Allyl | n-Propyl | n-Propyl | 0 | 0 |
| 256 | Allyl | n-Propyl | n-Propyl | 1 | 1 |
| 257 | Allyl | n-Propyl | Allyl | 0 | 0 |
| 258 | Allyl | n-Propyl | Allyl | 1 | 1 |
| 259 | Allyl | n-Propyl | (E)-But-2-en-1-yl | 0 | 0 |
| 260 | Allyl | n-Propyl | (E)-But-2-en-1-yl | 0 | 1 |

Tabelle 1 - Fortsetzung -

| Verbindung Nr. | $R^1$ | $R^2$ | $R^3$ | x | y |
|---|---|---|---|---|---|
| 261 | Allyl | n-Propyl | (E)-But-2-en-1-yl | 1 | 0 |
| 262 | Allyl | n-Propyl | (E)-But-2-en-1-yl | 1 | 1 |
| 263 | Allyl | n-Propyl | (E)-1-Chlorprop-1-en-3-yl | 0 | 0 |
| 264 | Allyl | n-Propyl | (E)-1-Chlorprop-1-en-3-yl | 0 | 1 |
| 265 | Allyl | n-Propyl | (E)-1-Chlorprop-1-en-3-yl | 1 | 0 |
| 266 | 2-Methyl-prop-2-en-1-yl | Ethyl | Ethyl | 0 | 0 |
| 267 | 2-Methyl-prop-2-en-1-yl | Ethyl | Ethyl | 1 | 1 |
| 268 | 2-Methyl-prop-2-en-1-yl | Ethyl | Allyl | 0 | 0 |
| 269 | 2-Methyl-prop-2-en-1-yl | Ethyl | Allyl | 1 | 1 |
| 270 | 2-Methyl-prop-2-en-1-yl | n-Propyl | Ethyl | 0 | 0 |
| 271 | 2-Methyl-prop-2-en-1-yl | n-Propyl | Ethyl | 1 | 1 |
| 272 | 2-Methyl-prop-2-en-1-yl | n-Propyl | Allyl | 0 | 0 |
| 273 | 2-Methyl-prop-2-en-1-yl | n-Propyl | Allyl | 1 | 1 |
| 274 | 2-Methoxyethyl | Ethyl | Ethyl | 0 | 0 |
| 275 | 2-Methoxyethyl | Ethyl | Ethyl | 1 | 1 |
| 276 | 2-Methoxyethyl | Ethyl | Allyl | 0 | 0 |
| 277 | 2-Methoxyethyl | Ethyl | Allyl | 1 | 1 |
| 278 | 2-Methoxyethyl | n-Propyl | Ethyl | 0 | 0 |
| 279 | 2-Methoxyethyl | n-Propyl | Ethyl | 0 | 1 |
| 280 | 2-Methoxyethyl | n-Propyl | Ethyl | 1 | 0 |
| 281 | 2-Methoxyethyl | n-Propyl | Ethyl | 1 | 1 |
| 282 | 2-Methoxyethyl | n-Propyl | n-Propyl | 0 | 0 |

Tabelle 1 - Fortsetzung -

| Verbindung Nr. | $R^1$ | $R^2$ | $R^3$ | x | y |
|---|---|---|---|---|---|
| 283 | 2-Methoxyethyl | n-Propyl | n-Propyl | 1 | 1 |
| 284 | 2-Methoxyethyl | n-Propyl | Allyl | 0 | 0 |
| 285 | 2-Methoxyethyl | n-Propyl | Allyl | 1 | 1 |
| 286 | 2-Methoxyethyl | n-Propyl | (E)-But-2-en-1-yl | 0 | 0 |
| 287 | 2-Methoxyethyl | n-Propyl | (E)-But-2-en-1-yl | 0 | 1 |
| 288 | 2-Methoxyethyl | n-Propyl | (E)-But-2-en-1-yl | 1 | 0 |
| 289 | 2-Methoxyethyl | n-Propyl | (E)-But-2-en-1-yl | 1 | 1 |
| 290 | 2-Methoxyethyl | n-Propyl | (E)-1-Chlorprop-1-en-3-yl | 0 | 0 |
| 291 | 2-Methoxyethyl | n-Propyl | (E)-1-Chlorprop-1-en-3-yl | 0 | 1 |
| 292 | 2-Methoxyethyl | n-Propyl | (E)-1-Chlorprop-1-en-3-yl | 1 | 0 |
| 293 | 2-Methoxyethyl | n-Propyl | (E)-1-Chlorprop-1-en-3-yl | 1 | 1 |
| 294 | 2-Methoxyethyl | n-Propyl | 1,1,2-Trichlorprop-1-en-3-yl | 0 | 0 |
| 295 | 2-Methoxyethyl | n-Propyl | 1,1,2-Trichlorprop-1-en-3-yl | 1 | 0 |
| 296 | 2-Methoxyethyl | n-Propyl | 1,1,2-Trichlorprop-1-en-3-yl | 1 | 1 |
| 297 | 2-Methoxyethyl | n-Propyl | Propargyl | 0 | 0 |
| 298 | 2-Methoxyethyl | n-Propyl | Propargyl | 1 | 1 |
| 299 | 2-(N,N-Dimethylamino)eth-1-yl | Ethyl | Ethyl | 0 | 0 |
| 300 | 2-(N,N-Dimethylamino)eth-1-yl | Ethyl | Ethyl | 1 | 1 |
| 301 | 2-(N,N-Dimethylamino)eth-1-yl | Ethyl | Allyl | 0 | 0 |
| 302 | 2-(N,N-Dimethylamino)eth-1-yl | Ethyl | Allyl | 1 | 1 |

Tabelle 2

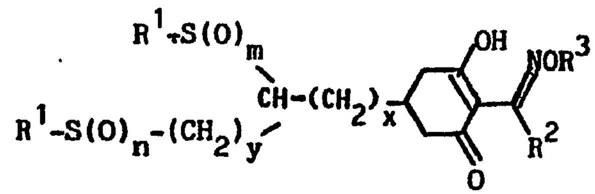

| Verbindung Nr. | $R^1$ | $R^2$ | $R^3$ | x | y | m | n |
|---|---|---|---|---|---|---|---|
| 303 | Methyl | n-Propyl | Ethyl | 0 | 0 | 1 | 0 |
| 304 | Methyl | n-Propyl | Ethyl | 0 | 0 | 2 | 2 |
| 305 | Ethyl | Ethyl | Ethyl | 0 | 0 | 1 | 0 |
| 306 | Ethyl | Ethyl | Ethyl | 0 | 0 | 2 | 1 |
| 307 | Ethyl | Ethyl | Ethyl | 0 | 0 | 2 | 2 |
| 308 | Ethyl | n-Propyl | Ethyl | 0 | 0 | 1 | 0 |
| 309 | Ethyl | n-Propyl | Ethyl | 0 | 0 | 2 | 2 |
| 310 | Ethyl | n-Propyl | Allyl | 0 | 0 | 1 | 0 |
| 311 | Ethyl | n-Propyl | (E)-1-Chlorprop-1-en-3-yl | 0 | 0 | 1 | 0 |
| 312 | Ethyl | n-Propyl | (E)-But-2-en-1-yl | 0 | 0 | 1 | 0 |
| 313 | Ethyl | n-Propyl | Ethyl | 1 | 1 | 1 | 0 |
| 314 | Ethyl | n-Propyl | Ethyl | 1 | 1 | 2 | 2 |
| 315 | Ethyl | n-Propyl | (E)-1-Chlorprop-1-en-3-yl | 1 | 1 | 1 | 0 |
| 316 | Ethyl | n-Propyl | (E)-1-Chlorprop-1-en-3-yl | 1 | 1 | 2 | 2 |

Tabelle 3

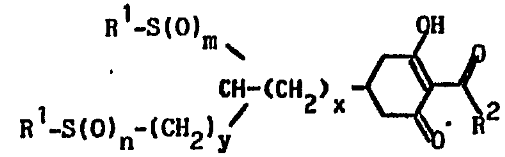

| Verbindung Nr. | $R^1$ | $R^2$ | x | y | m | n |
|---|---|---|---|---|---|---|
| 317 | Methyl | Ethyl | 0 | 0 | 0 | 0 |
| 318 | Methyl | Ethyl | 0 | 0 | 1 | 0 |
| 319 | Methyl | Ethyl | 0 | 0 | 2 | 2 |
| 320 | Ethyl | Ethyl | 0 | 0 | 0 | 0 |
| 321 | Ethyl | Ethyl | 0 | 0 | 1 | 0 |
| 322 | Ethyl | Ethyl | 0 | 0 | 2 | 2 |
| 323 | Ethyl | Ethyl | 1 | 1 | 0 | 0 |
| 324 | Ethyl | Ethyl | 1 | 1 | 1 | 0 |
| 325 | Ethyl | Ethyl | 1 | 1 | 2 | 2 |
| 326 | Ethyl | n-Propyl | 0 | 0 | 0 | 0 |
| 327 | Ethyl | n-Propyl | 0 | 0 | 1 | 0 |
| 328 | Ethyl | n-Propyl | 0 | 0 | 2 | 2 |
| 329 | Ethyl | n-Propyl | 1 | 1 | 0 | 0 |
| 330 | Ethyl | n-Propyl | 1 | 1 | 1 | 0 |
| 331 | Ethyl | n-Propyl | 1 | 1 | 2 | 2 |
| 332 | n-Propyl | n-Propyl | 0 | 0 | 0 | 0 |
| 333 | n-Butyl | Ethyl | 0 | 0 | 0 | 0 |
| 352 | Ethyl | Methyl | 0 | 0 | 0 | 0 |
| 353 | Ethyl | n-Butyl | 0 | 0 | 0 | 0 |

Tabelle 3 - Fortsetzung -

| Verbindung Nr. | $R^1$ | $R^2$ | x | y | m | n |
|---|---|---|---|---|---|---|
| 334 | n-Pentyl | Ethyl | 0 | 0 | 0 | 0 |
| 335 | n-Decyl | Ethyl | 0 | 0 | 0 | 0 |
| 336 | n-Octadecyl | Ethyl | 0 | 0 | 0 | 0 |
| 337 | Isopropyl | n-Propyl | 0 | 0 | 0 | 0 |
| 338 | tert.-Butyl | n-Propyl | 0 | 0 | 0 | 0 |
| 339 | Allyl | n-Propyl | 0 | 0 | 0 | 0 |
| 340 | Allyl | n-Propyl | 1 | 1 | 0 | 0 |
| 341 | 2-Methoxyethyl | n-Propyl | 0 | 0 | 0 | 0 |
| 342 | 2-Methoxyethyl | n-Propyl | 1 | 1 | 0 | 0 |
| 343 | 2-(N,N-Dimethylamino)eth-1-yl | Ethyl | 0 | 0 | 0 | 0 |
| 344 | 2-(N,N-Dimethylamino)eth-1-yl | Ethyl | 1 | 1 | 0 | 0 |

Tabelle 4

Beispiele für Salze der in Tabellen 1 bis 3 angegebenen Wirkstoffe

| Verbindung Nr. | Struktur (vgl. Verbindung-Nr.) | Salzart | Fp.(°C) |
|---|---|---|---|
| 345 | 57 | Natriumsalz | |
| 346 | 57 | Bariumsalz | |
| 347 | 57 | Kupfer(II)-salz | |
| 348 | 57 | Tri-n-butylammoniumsalz | |
| 349 | 57 | Benzyl-trimethylammoniumsalz | |
| 350 | 57 | Trimethylsulfoxoniumsalz | |

Die Identifizierung und Charakterisierung der Verbindung der Formel I erfolgen am geeignetsten mit Hilfe der Protenenkernresonanzspektroskopie. In der nachstehenden Tabelle 5 sind daher einige strukturspezifische $^1H$-NMR-Daten angegeben (Lösungsmittel $CDCl_3$, interner Standard Tetramethylsilan; s = Singulett, d = Dublett, t = Triplett, q = Quartett, m = Multiplett).

Tabelle 5

| Verbindung Nr. | Charakteristische $^1$H-NMR-Daten( ) in ppm |
|---|---|
| 1 | 1,15 (t); 2,15 (s); 4,12 (q) |
| 37 | 1,28 (m); 2,39 (s); 4,11 (q) |
| 40 | 1,17 (t); 1,27 (t); 1,32 (t); 3,73 (d); 4,10 (q) |
| 42 | 0,98 (t); 1,13 (t); 1,27 (t); 3,73 (d); 4,20 (t) |
| 44 | 1,13 (t); 1,27 (t); 3,72 (d); 4,54 (d); 5,98 (m) |
| 48 | 1,15 (t); 1,28 (t); 1,78 (d); 3,73 (d); 4,44 (d); 5,62 (m); 5,83 (m) |
| 52 | 1,14 (t); 1,28 (t); 3,73 (d); 4,51 (d); 6,10 (m); 6,35 (d) |
| 56 | 1,14 (t), 1,27 (t); 3,74 (d); 4,66 (s) |
| 57 | 0,98 (t); 1,26 (t); 1,32 (t); 3,72 (d); 4,09 (q) |
| 60 | 0,98 (t); 1,24 (t); 1,30 (t); 4,10 (q) |
| 61 | 0,98 (t); 1,27 (t); 3,73 (d); 4,52 (d); 5,97 (m) |
| 63 | 0,97 (t); 1,28 (t); 3,73 (d); 4,30 (s) |
| 65 | 0,96 (t); 1,27 (t); 3,73 (d); 4,88 (s) |
| 66 | 0,95 (t); 1,26 (t); 3,71 (d); 3,86 (s) |
| 67 | 0,97 (t); 1,27 (t); 3,71 (d); 4,00 (t) |
| 71 | 0,96 (t); 1,27 (t); 3,71 (d); 4,43 (d) |
| 75 | 0,98 (t); 1,27 (t); 3,72 (d); 4,52 (d); 6,08 (m); 6,33 (d); |
| 79 | 0,96 (t); 2,48 (s), 3,72 (d); 4,64 (s) |
| 80 | 0,96 (t); 3,43 (s); 3,72 (d); 5,05 (s) |
| 98 | 0,99 (m); 2,0-3,0 (m); 4,10 (q) |
| 159 | 0,97 (t); 1,32 (m); 4,10 (q) |
| 207 | 0,97 (t); 1,37 (s); 4,09 (q) |
| 219 | 0,95 (t); 1,37 (s); 4,51 (d) |
| 309 | 0,98 (t); 1,43 (t); 4,10 (q) |
| 317 | 0,88 (t); 2,15 (s); 3,57 (s) |
| 320 | 1,12 (t); 1,27 (t); 3,05 (q); 3,77 (d) |
| 326 | 0,97 (t); 1,27 (t); 3,00 (t); 3,75 (d) |
| 328 | 0,97 (t); 1,43 (t); 2,7-3,7 (m) |
| 329 | 0,98 (t); 1,28 (t); 2,1-3,3 (m) |
| 332 | 0,97 (m); 1,63 (m); 2,0-3,1 (m) |
| 337 | 0,97 (t); 1,28 (m); 3,82 (d) |
| 338 | 0,98 (t); 1,37 (s); 3,95 (s) |
| 351 | 0,92 (t); 3,73 (d); 4,10 (q) |
| 352 | 1,28 (t); 2,4-3,0 (m); 3,76 (d) |
| 353 | 0,92 (t); 1,27 (t); 3,74 (d) |

Die Cyclohexenonderivate der Formel I können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Chlorbenzol, Isophoron oder stark polare Lösungsmittel, wie N,N-Dimethylformamid, Dimethylsulfoxid, N-Methylpyrrolidon oder Wasser in Betracht.

Wäßrige Anwendungsformen können aus Emulsionskonzentraten, Dispersionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol oder Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxy propylen, Laurylalkoholpolyglykoletheracetat, Sorbitester, Lignin, Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Formulierungen enthalten zwischen 0,1 und 95 Gew.%, vorzugsweise zwischen 0,5 und 90 Gew.% Wirkstoff.

Beispiele für Formulierungen sind:

I. Man vermischt 90 Gewichtsteile der Verbindung Nr. 60 mit 10 Gewichtsteilen N-Methyl-α-pyrrolidon und erhält eine Lösung, die zur Anwendung in Form kleinster Tropfen geeignet ist.

II. 20 Gewichtsteile der Verbindung Nr. 61 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

III. 20 Gewichtsteile der Verbindung Nr. 320 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.-% des Wirkstoffs enthält.

IV. 20 Gewichtsteile des Wirkstoffs Nr. 52 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.-% des Wirkstoffs enthält.

V. 20 Gewichtsteile des Wirkstoffs Nr. 44 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gew.-% des Wirkstoffs enthält.

VI. 3 Gewichtsteile des Wirkstoffs Nr. 40 werden mit 97 Gewichtsteilen feinteiligem Kaolin vermischt. Man erhält auf diese Weise ein Stäubemittel, das 3 Gew.-% des Wirkstoffs enthält.

VII. 30 Gewichtsteile des Wirkstoffs Nr. 48 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Gewichtsteile des Wirkstoffs Nr. 75 werden mit 2 Gewichtsteilen Calciumsalz der Dodecylbenzolsulfonsäure, 8 Gewichtsteilen Fettalkohol-polyglykolether, 2 Gewichtsteilen Natriumsalz eines Phenol-Harnstoff-Formaldehyd-Kondensates und 68 Gewichtsteilen eines paraffinischen Mineralöls innig vermischt. Man erhält eine stabile ölige Dispersion.

IX. 40 Gewichtsteile des Wirkstoffs Nr. 57 werden in 60 Gewichtsteilen einer Mischung, die aus 93 Gew.-% Xylol und 7 Gew.-% des Anlagerungsproduktes von 8 Mol Ethylenoxid an 1 Mol Nonylphenol besteht, gelöst. Man erhält eine Lösung, die 40 Gew.-% des Wirkstoffs enthält.

Die neuen Cyclohexenonderivate der Formel I, in der A für den Rest $NOR^3$ steht, besitzen eine gute herbizide Wirkung, vorzugsweise gegen Arten aus der Familie der Gräser (Gramineen). Sie sind verträglich und somit selektiv in breitblättrigen Kulturen sowie in monokotylen Gewächsen, welche nicht zu den Gramineen zählen. Es sind auch Verbindungen darunter, die in Getreidekulturen zur Bekämpfung unerwünschter Gräser geeignet sind.

Die Applikation kann im Vorauflaufverfahren oder im Nachauflaufverfahren erfolgen. Sind die Wirkstoffe für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit, Zielpflanzen und Wachstumsstadium 0,03 bis 3 kg/ha, vorzugsweise 0,06 bis 1,0 kg/ha.

Die Wirkung der Cyclohexenonderivate der Formel I ($A = NOR^3$) auf das Pflanzenwachstum läßt sich durch Gewächshausversuche zeigen:

Als Kulturgefäße dienen Plastikblumentöpfe mit 300 $cm^3$ Inhalt und lehmigem Sand mit etwa 3,0 % Humus als Substrat. Die Samen der Testpflanzen werden nach Arten getrennt flach eingesät. Bei Vorauflaufbehandlung werden die Wirkstoffe unmittelbar danach auf die Erdoberfläche aufgebracht. Sie werden hierbei in Wasser als Verteilungsmittel suspendiert oder emulgiert und mittels fein verteilender Düsen gespritzt. Die Aufwandmengen betragen 3,0 kg/ha.

Nach dem Aufbringen der Mittel werden die Gefäße leicht beregnet, um Keimung und Wachstum in Gang zu bringen. Danach deckt man die Gefäße mit durchsichtigen Plastikhauben ab, bis die Pflanzen angewachsen sind. Diese Abdeckung bewirkt ein gleichmäßiges Keimen der Testpflanzen, sofern dies nicht durch die Wirkstoffe beeinträchtigt wird.

Zum Zweck der Nachauflaufbehandlung zieht man die Testpflanzen je nach Wuchsform erst bis zu einer Wuchshöhe von 3 bis 15 cm an und behandelte sie danach. Die Sojapflanzen werden in einem mit Torfmull (peat) angereicherten Substrat angezogen. Zur Nachauflaufbehandlung werden entweder direkt gesäte und in den gleichen Gefäßen aufgewachsene Pflanzen ausgewählt, oder sie werden erst als Keimpflanzen getrennt angezogen und einige Tage vor der Behandlung in die Versuchsgefäße verpflanzt. Die Aufwandmenge für die Nachauflaufbehandlung betragen 0,25 und 0,5 Wirkstoff/ha. Eine Abdeckung unterbleibt bei der Nachauflaufbehandlung.

Die Versuchsgefäße werden im Gewächshaus aufgestellt, wobei für wärmeliegende Arten wärmere Bereiche (20 bis 35°C) und für solche gemäßigter Klimate 10 bis 25°C bevorzugt werden. Die Versuchsperiode erstreckt sich über 2 bis 4 Wochen. Während dieser Zeit werden die Pflanzen gepflegt und ihre Reaktion auf die einzelnen Behandlungen wird ausgewertet. Bewertet wird nach einer Skala von 0 bis 100. Dabei bedeutet 100 kein Aufgang der Pflanzen bzw. völlige Zerstörung zumindest der oberirdischen Teile.

Die in den Gewächshausversuchen verwendeten Pflanzen setzen sich aus folgenden Arten zusammen:

| Botanischer Name | Deutscher Name |
|---|---|
| Alopecurus myosuroides | Ackerfuchsschwanz |
| Avena fatua | Flughafer |
| Avena sativa | Hafer |
| Beta vulgaris | Zuckerrübe |
| Digitaria sanguinalis | Blutfingerhirse |
| Echinochloa crus-galli | Hühnerhirse |
| Lolium multiflorum | Ital. Raygras |
| Medicago sativa | Luzerne |
| Setaria italica | Kolbenhirse |
| Sinapis alba | Weißer Senf |
| Triticum aestivum | Weizen |
| Zea mays | Mais |

Bei Vorauflaufanwendung mit einer Wirkstoffmenge von 3 kg/ha erweisen sich die beispielhaft ausgewählten Verbindungen Nr. 6O, 61, 75, 52, 44, 4O und 48 als herbizid wirksam gegen Pflanzen aus der Familie der Gräser. Senf als breitblättrige Beispielpflanze wird nicht oder nur unwesentlich im Wachstum beeinträchtigt.

Beispielsweise lassen sich mit der Verbindung Nr. 57 im Nachauflaufverfahren Ausfallmais und unerwünschte Grasarten gut bekämpfen, während die Zuckerrübe als breitblättrige Kulturpflanzen keinen Schaden erleidet.

Zur Bekämpfung grasartiger Vegetation in Luzerne lassen sich im Nachauflaufverfahren z.B. die Verbindungen Nr. 6O, 61 und 75 verwenden. Die Wirkstoffe beeinflussen die Kulturpflanze nicht; sie sind selektiv.

Weiterhin können die Cyclohexenonderivate der Formel I (A = $NOR^3$) in einer Gramineenkultur, wie Weizen, als Gräserherbizide eingesetzt werden. Die beispielhaft ausgewählten Verbindungen Nr. 6O, 61 und 75 eignen sich z.B. zur Bekämpfung wichtiger Ungräser im Nachauflaufverfahren, wobei Weizenpflanzen allenfalls unerheblich beeinträchtigt werden.

In Anbetracht des erfaßbaren Wirkungsspektrum zur Unkrautbekämpfung, der Verträglichkeit für Kulturpflanzen oder der unerwünschten Beeinflussung des Wachstums derselben sowie angesichts der Vielfalt der Applikationsmethoden können die neuen Cyclohexenonderivate in einer großen Zahl von Kulturpflanzen eingesetzt werden. In Betracht kommen beispielsweise folgende Kulturen:

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rüben |
| Camellia sinensis | Teestrauch |
| Carthamus tinctorius | Saflor - Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum Gossypium herbaceum Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lactuca sativa | Kopfsalat |
| Lens culinaris | Linse |

| Botanischer Name | Deutscher Name |
|---|---|
| Linum usitatissimum | Faserlein |
| Lycopersicon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicothiana tabacum (N. rustica) | Tabak |
| Olea europaea | Ölbaum |
| Oryza sativa | Reis |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirche |
| Prunus domestica | Pflaume |
| Prunus dulcis | Mandelbaum |
| Prunus persica | Pfirsisch |
| Pyrus communis | Birne |
| Ribes sylvestre | Rote Johannisbeere |
| Ribes uva-crispa | Stachelbeere |
| Ricinus communis | Rizinus |
| Secale cereale | Roggen |
| Sesamum indicum | Sesam |
| Solanum tuberosum | Kartoffel |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die Cyclohexenonderivate der Formel I (A = $NOR^3$) sowohl unter sich als auch mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate, Chinolincarbonsäuren und andere in Betracht.

Außerdem kann es von Nutzen sein, die Cyclohexenonderivate der Formel I (A = $NOR^3$) allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die Cyclohexenonderivate der Formel I (A = Sauerstoff) können praktisch alle Entwicklungsstadien einer Pflanze verschiedenartig beeinflussen und werden deshalb als Wachstumsregulatoren eingesetzt. Die Wirkungsvielfalt der Pflanzenwachstumsregulatoren hängt ab vor allem

a) von der Pflanzenart und -sorte,
b) von dem Zeitpunkt der Applikation, bezogen auf das Entwicklungsstadium der Pflanze und von der Jahreszeit,
c) von dem Applikationsort und -verfahren (Samenbeize, Bodenbehandlung oder Blattapplikation)
d) von klimatischen Faktoren, z.B. Temperatur, Niederschlagsmenge, außerdem auch Tageslänge und Lichtintensität
e) von der Bodenbeschaffenheit (einschließlich Düngung),
f) von der Formulierung bzw. Anwendungsform des Wirkstoffs und schließlich
g) von den angewendeten Konzentrationen der aktiven Substanz.

Aus der Reihe der verschiedenartigen Anwendungsmöglichkeiten der erfindungsgemäßen Pflanzenwachstumsregulatoren im Pflanzenanbau, in der Landwirtschaft und im Gartenbau, werden einige nachstehend erwähnt.

A. Mit den erfindungsgemäß verwendbaren Verbindungen läßt sich das vegetative Wachstum der Pflanzen stark hemmen, was sich insbesondere in einer Reduzierung des Längenwachstums äußert. Die behandelten Pflanzen weisen demgemäß einen gedrungenen Wuchs auf; außerdem ist eine dunklere Blattfärbung zu beobachten.
Als vorteilhaft für die Praxis erweist sich z.B. die Verringerung des Grasbewuchses an Straßenrändern, Decken, Kanalböschungen und auf Rasenflächen wie Park-, Sport- und Obstanlagen, Zierrasen und Flugplätzen, so daß der Arbeits- und kostenaufwendige Rasenschnitt reduziert werden kann.
Von wirtschaftlichem Interesse ist auch die Erhöhung der Standfestigkeit von lageranfälligen Kulturen wie Getreide, Mais, Sonnenblumen und Soja. Die dabei verursachte Halmverkürzung und Halmverstärkung verringern oder beseitigen die Gefahr des "Lagerns" (des Umknickens) von Pflanzen unter ungünstigen Witterungsbedingungen vor der Ernte.
Wichtig ist auch die Anwendung von Wachstumsregulatoren zur Hemmung des Längenwachstums und zur zeitlichen Veränderung des Reifeverlaufs bei Baumwolle. Damit wird ein vollständig mechanisiertes Beeernten dieser wichtigen Kulturpflanze ermöglicht.
Durch Anwendung von Wachstumsregulatoren kann auch die seitliche Verzweigung der Pflanzen vermehrt oder gehemmt werden. Daran besteht Interesse, wenn z.B. bei Tabakpflanzen die Ausbildung von Seitentrieben (Geiztrieben) zugunsten des Blattwachstums gehemmt werden soll.
Mit Wachstumsregulatoren läßt sich beispielsweise bei Winterraps auch die Frostresistenz erheblich erhöhen. Dabei werden einerseits das Längenwachstum und die Entwicklung einer zu üppigen (und dadurch besonders frostanfälligen) Blatt- bzw. Pflanzenmasse gehemmt. Andererseits werden die jungen Rapspflanzen nach der Aussaat und vor dem Einsetzen der Winterfröste trotz günstiger Wachstumsbedingungen im vegetativen Entwicklungsstadium zurückgehalten. Dadurch wird auch die Frostgefährdung solcher Pflanzen beseitigt, die zum vorzeitigen Abbau der Blühhemmung und zum Übergang in die generativen Phase neigen. Auch bei anderen Kulturen, z.B. Wintergetreide ist es vorteilhaft, wenn die Bestände durch Behandlung mit erfindungsgemäßen Verbindungen im Herbst zwar gut bestockt werden, aber nicht zu üppig in den Winter hineingehen. Dadurch kann der erhöhten Frostempfindlichkeit und - wegen der relativ geringen Blatt- bzw. Pflanzenmasse - dem Befall mit verschiedenen Krankheiten (z.B. Pilzkrankheit) vorgebeut werden. Die Hemmung des vegetativen Wachstums ermöglicht außerdem bei vielen Kulturpflanzen eine dichtere Bepflanzung des Bodens, so daß ein Mehrertrag bezogen auf die Bodenfläche erzielt werden kann.

B. Mit den neuen Mitteln lassen sich Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren, den Gehalt an Zucker in

Zuckerrüben, Zuckerrohr sowie Zitrusfrüchten zu erhöhen, den Proteingehalt in Getreide oder Soja zu steigern oder Gummibäume zum vermehrten Latexfluß zu stimulieren.
Dabei können die Cyclohexenonderivate der Formel I (A = Sauerstoff) Ertragssteigerungen durch Eingriffe in den pflanzlichen Stoffwechsel bzw. durch Förderung oder Hemmung des vegetativen und/oder des generativen Wachstums verursachen.

C. Mit Pflanzenwachstumsregulatoren lassen sich schließlich sowohl eine Verkürzung bzw. Verlängerung der Entwicklungsstadien als auch eine Beschleunigung bzw. Verzögerung der Reife der geernteten Pflanzenteile vor oder nach der Ernte erreichen.
Von wirtschaftlichem Interesse ist beispielsweise die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- bzw. Blatt- und Sproßteil der Pflanze ist auch für ein gut kontrollierbares Entblättern von Nutzpflanzen wesentlich.

D. Mit Wachstumsregulatoren kann weiterhin der Wasserverbrauch von Pflanzen reduziert werden. Dies ist besonders wichtig für landwirtschaftliche Nutzflächen, die unter einem hohen Kostenaufwand künstlich bewässert werden müssen, z.B. in ariden oder semiariden Gebieten. Durch den Einsatz der erfindungsgemäßen Substanzen läßt sich die Intensität der Bewässerung reduzieren und damit eine kostengünstigere Bewirtschaftung durchführen. Unter dem Einfluß von Wachstumsregulatoren kommt es zu einer besseren Ausnutzung des vorhandenen Wassers, weil u.a.

- die Öffnungsweite der Stomata reduziert wird
- eine dickere Epidermis und Cuticula ausgebildet werden
- die Durchwurzelung des Bodens verbessert wird und
- das Mikroklima im Pflanzenbestand durch einen kompakteren Wuchs günstig beeinflußt wird.

Die erfindungsgemäß zu verwendenden Wirkstoffe der Formel I (A = Sauerstoff) können den Kulturpflanzen sowohl vom Samen her (als Saatgutbeizmittel) als auch über den Boden, d.h. durch die Wurzel sowie - besonders bevorzugt - durch Spritzung über das Blatt zugeführt werden.

Infolge der hohen Pflanzenverträglichkeit kann die Aufwandmenge stark variiert werden.

Bei der Saatgutbehandlung werden im allgemeinen Wirkstoffmengen von 0,001 bis 50 g je Kilogramm Saatgut, vorzugsweise 0,01 bis 10 g, benötigt.

Für die Blatt- und Bodenbehandlung sind im allgemeinen Gaben von 0,01 bis 10 kg/ha bevorzugt 0,05 bis 3 kg/ha als ausreichend zu betrachten.

Zur Bestimmung der wachstumsregulierenden Eigenschaft der Prüfsubstanzen wurden Testpflanzen auf ausreichend mit Nährstoffen versorgtem Kultursubstrat in Kunststoffgefäßen von ca. 12,5 cm Durchmesser angezogen.

Im Nachauflaufverfahren wurden die zu prüfenden Substanzen in wäßriger Aufbereitung auf die Pflanzen gesprüht. Die beobachtete wachstumsregulierende Wirkung wurde bei Versuchsende durch Wuchshöhenmessung belegt. Die so gewonnenen Meßwerte wurden zur Wuchshöhe der unbehandelten Pflanzen in Relation gesetzt. Weiterhin diente Chlorcholinchlorid als Vergleichssubstanz.

Die beispielhaft ausgewählten Verbindungen Nr. 320, 337, 352 und 353 zeigten dabei günstige wachstumsregulierende Eigenschaften beispielsweise bei Sommerweizen, Sommergerste und Sonnenblumen.

Gleichlaufend zur Reduzierung des Längenwachstums stieg auch die Farbintensität der Blätter an. Der erhöhte Chlorophyllgehalt läßt eine ebenfalls erhöhte Photosyntheserate und damit eine erhöhte Ertragsbildung erwarten.

Junge Reiskeimlinge (Sorte Girona) wurden in einer Nährlösung kultiviert, die die jeweiligen Wirkstoffe in unterschiedlichen Konzentrationen enthielt. Nach sechs Tagen Behandlung bei 25°C im Dauerlicht wurde die Wirkstoffkonzentration bestimmt, die das Längenwachstum der zweiten Blattscheide um 50 % vermindert (vgl.: W. Rademacher und J. Jung, Berichte aus dem Fachgebiet Herbologie, Heft 24, pp 127 - 134, Universität Hohenheim, 1983).

Beispielsweise zeigte die Verbindung Nr. 320 dabei günstige wachstumsregulierende Eigenschaften.

Die neuen Mittel der Formel I (A = Sauerstoff) können in diesen Anwendungsformen auch zusammen mit anderen Wirkstoffen vorliegen, wie z.B. Herbiziden, Insektiziden, Wachstumsregulatoren und Fungiziden oder auch mit Düngemitteln vermischt und ausgebracht werden. Beim Vermischen mit Wachstumsregulatormischungen treten auch synergistische Effekte auf, d.h. die Wirksamkeit des Kombinationsproduktes ist größer als die addierten Wirksamkeiten der Einzelkomponenten.

**Patentansprüche**

1. Cyclohexenonderivate der Formel I

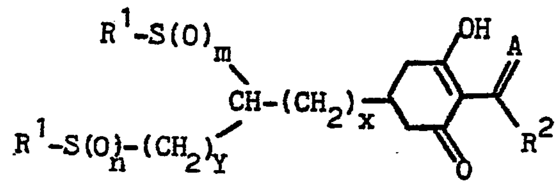

(I),

in der
$R^1$ $C_1$-$C_{18}$-Alkyl, $C_3$-$C_6$-Alkoxyalkyl, $C_3$-$C_6$-Alkylthioalkyl, $C_3$-$C_6$-Di-alkylaminoalkyl, $C_3$-$C_6$-Alkenyl oder $C_3$-$C_6$-Alkinyl,
$R^2$ $C_1$-$C_4$-Alkyl,
A Sauerstoff oder den Rest $NOR^3$, wobei $R^3$ für $C_1$-$C_4$-Alkyl, $C_3$-$C_4$-Alkenyl, $C_3$-$C_4$-Alkinyl, $C_2$-$C_4$-Halogenalkyl, $C_2$-$C_4$-Halogenalkenyl oder $C_2$-$C_4$-Alkoxyalkyl steht,
m und n gleich oder verschieden sind und unabhängig voneinander O, 1 oder 2 und
x und y gleich oder verschieden sind und unabhängig voneinander jeweils O oder 1
bedeuten, sowie Salze dieser Verbindungen.

2. Cyclohexenonderivate der Formel I gemäß Anspruch 1, dadurch gekennzeichnet, daß m, n, x und y jeweils O und A den Rest $NOR^3$ bedeuten.

3. Herbizid, enthaltend einen inerten Zusatztoff und ein Cyclohexenonderivat der Formel I

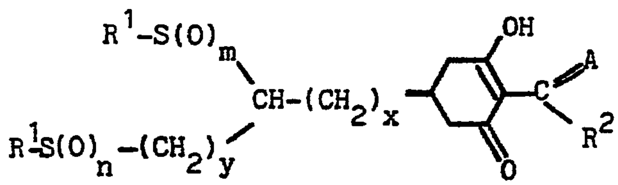

(I),

in der
$R^1$ $C_1$-$C_{18}$-Alkyl, $C_3$-$C_6$-Alkoxyalkyl, $C_3$-$C_6$-Alkylthioalkyl, $C_3$-$C_6$-Di-alkylaminoalkyl, $C_3$-$C_6$-Alkenyl oder $C_3$-$C_6$-Alkinyl,
$R^2$ $C_1$-$C_4$-Alkyl,
A Sauerstoff oder den Rest $NOR^3$, wobei $R^3$ für $C_1$-$C_4$-Alkyl, $C_3$-$C_4$-Alkenyl, $C_3$-$C_4$-Alkinyl, $C_2$-$C_4$-Halogenalkyl, $C_2$-$C_4$-Halogenalkenyl oder $C_2$-$C_4$-Alkoxyalkyl steht,
m und n gleich oder verschieden sind und unabhängig voneinander O, 1 oder 2 und
x und y gleich oder verschieden sind und unabhängig voneinander jeweils O oder 1
bedeuten, in der A für den Rest $NOR^3$ steht, oder ein Salz dieser Verbindung.

4. Verfahren zur Bekämpfung unerwünschten Pflanzenwachstums, dadurch gekennzeichnet, daß man die unerwünschten Pflanzen oder die von unerwünschtem Pflanzenwachstum freizuhaltende Fläche mit einer herbizid wirksamen Menge eines Cyclohexenonderivats der Formel I

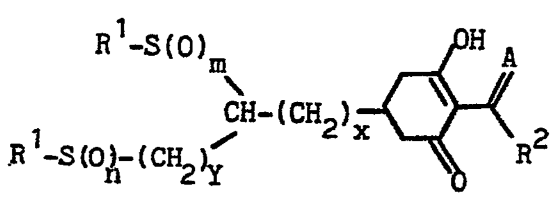

(I),

in der
$R^1$ $C_1$-$C_{18}$-Alkyl, $C_3$-$C_6$-Alkoxyalkyl, $C_3$-$C_6$-Alkylthioalkyl, $C_3$-$C_6$-Di-alkylaminoalkyl, $C_3$-$C_6$-Alkenyl oder $C_3$-$C_6$-Alkinyl,
$R^2$ $C_1$-$C_4$-Alkyl,
A Sauerstoff oder den Rest $NOR^3$, wobei $R^3$ für $C_1$-$C_4$-Alkyl, $C_3$-$C_4$-Alkenyl, $C_3$-$C_4$-Alkinyl, $C_2$-$C_4$-Halogenalkyl, $C_2$-$C_4$-Halogenalkenyl oder $C_2$-$C_4$-Alkoxyalkyl steht,
m und n gleich oder verschieden sind und unabhängig voneinander O, 1 oder 2 und
x und y gleich oder verschieden sind und unabhängig voneinander jeweils O oder 1
bedeuten, in der A für den Rest $NOR^3$ steht, oder eines Salzes dieser Verbindung behandelt.

5. Mittel zur Regulierung des Pflanzenwachstums, enthaltend einen inerten Zusatzstoff und ein Cyclohexenonderivat der Formel I

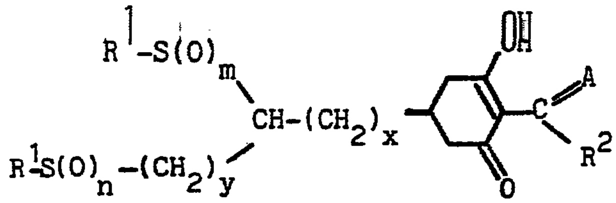 (I),

in der
$R^1$ $C_1$-$C_{18}$-Alkyl, $C_3$-$C_6$-Alkoxyalkyl, $C_3$-$C_6$-Alkylthioalkyl, $C_3$-$C_6$-Di-alkylaminoalkyl, $C_3$-$C_6$-Alkenyl oder $C_3$-$C_6$-Alkinyl,
$R^2$ $C_1$-$C_4$-Alkyl,
A Sauerstoff oder den Rest $NOR^3$, wobei $R^3$ für $C_1$-$C_4$-Alkyl, $C_3$-$C_4$-Alkenyl, $C_3$-$C_4$-Alkinyl, $C_2$-$C_4$-Halogenalkyl, $C_2$-$C_4$-Halogenalkenyl oder $C_2$-$C_4$-Alkoxyalkyl steht,
m und n gleich oder verschieden sind und unabhängig voneinander O, 1 oder 2 und
x und y gleich oder verschieden sind und unabhängig voneinander jeweils O oder 1
bedeuten, in der A für Sauerstoff steht, oder ein Salz dieser Verbindung.

6. Verfahren zur Regulierung des Pflanzenwachstums, dadurch gekennzeichnet, daß man eine wirksame Menge eines Cyclohexenonderivats der Formel I

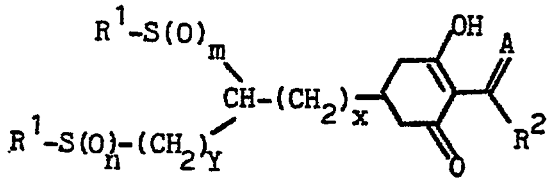 (I),

in der
$R^1$ $C_1$-$C_{18}$-Alkyl, $C_3$-$C_6$-Alkoxyalkyl, $C_3$-$C_6$-Alkylthioalkyl, $C_3$-$C_6$-Di-alkylaminoalkyl, $C_3$-$C_6$-Alkenyl oder $C_3$-$C_6$-Alkinyl,
$R^2$ $C_1$-$C_4$-Alkyl,
A Sauerstoff oder den Rest $NOR^3$, wobei $R^3$ für $C_1$-$C_4$-Alkyl, $C_3$-$C_4$-Alkenyl, $C_3$-$C_4$-Alkinyl, $C_2$-$C_4$-Halogenalkyl, $C_2$-$C_4$-Halogenalkenyl oder $C_2$-$C_4$-Alkoxyalkyl steht,
m und n gleich oder verschieden sind und unabhängig voneinander O, 1 oder 2 und
x und y gleich oder verschieden sind und unabhängig voneinander jeweils O oder 1
bedeuten, in der A für Sauerstoff steht, oder eines Salzes dieser Verbindung auf Pflanzen oder deren Lebensraum einwirken läßt.

7. Verbindung der Formel I gemäß Anspruch 1, dadurch gekennzeichnet, daß
$R^1$ Ethyl
$R^2$ n-Propyl
A $NOR^3$
$R^3$ Ethyl, Allyl oder 1-Chlorprop-1-en-3-yl
X O or 1
Y O or 1 und
n O
bedeutet.

## Claims

1. A cyclohecenone derivative of the formula I

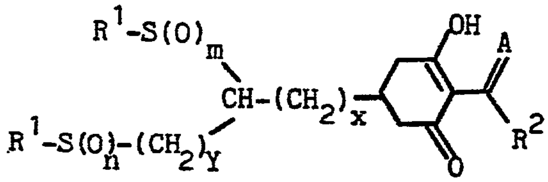 (I),

where $R^1$ is $C_1$–$C_{18}$-alkyl, $C_3$–$C_6$-alkoxyalkyl, $C_3$–$C_6$-alkylthioalkyl, $C_3$–$C_6$-dialkylaminoalkyl, $C_3$–$C_6$-alkenyl or $C_3$–$C_6$-alkynal, $R^2$ is $C_1$–$C_4$-alkyl, A is oxygen or $NOR^3$, $R^3$ being $C_1$–$C_4$-alkyl, $C_3$- or $C_4$-alkenyl, $C_3$- or $C_4$-alkynyl, $C_3$–$C_4$-haloalkyl, $C_2$–$C_4$-haloalkenyl or $C_2$–$C_4$-alkoxyalkyl, m and n are

identical or different and independently of one another are each 0, 1 or 2, and x and y are identical or different and independently of one another are each 0 or 1, and salts of said compounds.

2. A cyclohexenone derivative of the formula I as claimed in claim 1, wherein m, n, x and y are each 0 and A is $NOR^3$.

3. A herbicide containing an inert additive and a cyclohexenone derivative of the formula I

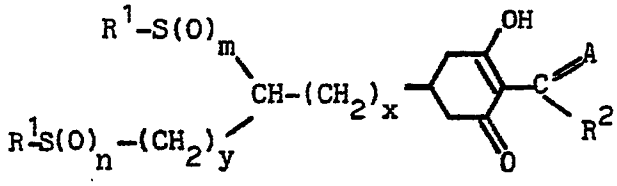 (I),

where $R^1$ is $C_1$–$C_{18}$-alkyl, $C_3$–$C_6$-alkoxyalkyl, $C_3$–$C_6$-alkylthioalkyl, $C_3$–$C_6$-dialkylaminoalkyl, $C_3$–$C_6$-alkenyl or $C_3$–$C_6$-alkynyl, $R^2$ is $C_1$–$C_4$-alkyl, A is oxygen or $NOR^3$, $R^3$ being $C_1$–$C_4$-alkyl, $C_3$- or $C_4$-alkenyl, $C_3$- or $C_4$-alkynyl, $C_2$–$C_4$-haloalkyl, $C_2$–$C_4$-haloalkenyl or $C_2$–$C_4$-alkoxyalkyl, m and n are identical or different and independently of one another are each 0, 1 or 2, and x and y are identical or different and independently of one another are each 0 or 1, where A is $NOR^3$, or a salt of said compound.

4. A process for controlling undesirable plant growth, wherein the undesirable plants or the area to be kept free from undesirable plant growth are or is treated with a herbicidally effective amount of a cyclohexenone derivative of the formula I

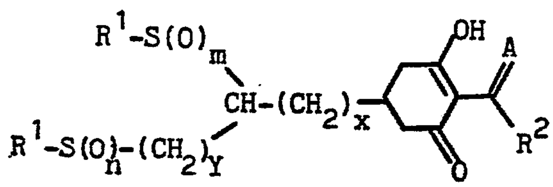 (I),

where $R^1$ is $C_1$–$C_{18}$-alkyl, $C_3$–$C_6$-alkoxyalkyl, $C_2$–$C_6$-alkylthioalkyl, $C_3$–$C_6$-dialkylaminoalkyl, $C_3$–$C_6$-alkenyl or $C_3$–$C_6$-alkynyl, $R^2$ is $C_1$–$C_4$-alkyl, A is oxygen or $NOR^3$, $R^3$ being $C_1$–$C_4$-alkyl, $C_3$- or $C_4$-alkenyl, $C_3$- or $C_4$-alkynyl, $C_2$–$C_4$-haloalkyl, $C_2$–$C_4$-haloalkenyl or $C_2$–$C_4$-alkoxyalkyl, m and n are identical or different and independently of one another are each 0, 1 or 2, and x and y are identical or different and independently of one another are each 0 or 1, where A is $NOR^3$, or a salt of said compound.

5. An agent for regulating plant growth, containing an inert additive and a cyclohexenone derivative of the formula I

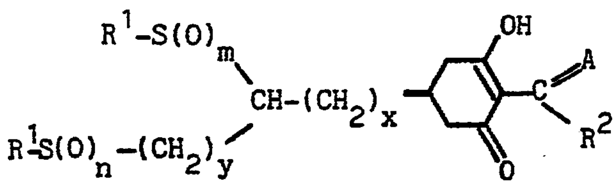 (I),

where $R^1$ is $C_1$–$C_{18}$-alkyl, $C_3$–$C_6$-alkoxyalkyl, $C_3$–$C_6$-alkylthioalkyl, $C_3$–$C_6$-dialkylaminoalkyl, $C_3$–$C_6$-alkenyl or $C_3$–$C_6$-alkynyl, $R^2$ is $C_1$–$C_4$-alkyl, A is oxygen or $NOR^3$, $R^3$ being $C_1$–$C_4$-alkyl, $C_3$- or $C_4$-alkenyl, $C_3$- or $C_4$-alkynyl, $C_2$–$C_4$-haloalkyl, $C_2$–$C_4$-haloalkenyl or $C_2$–$C_4$-alkoxyalkyl, m and n are identical or different and independently of one another are each 0, 1 or 2, and x and y are identical or different and independently of one another are each 0 or 1, where A is oxygen, or a salt of said compound.

6. A process for regulating plant growth, wherein an effective amount of a cyclohexenone derivative of the formula I

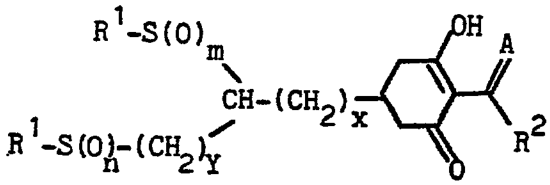 (I),

where $R^1$ is $C_1$–$C_{18}$-alkyl, $C_3$–$C_6$-alkoxyalkyl, $C_3$–$C_6$-alkylthioalkyl, $C_3$–$C_6$-dialkylaminoalkyl, $C_3$–$C_6$-alkenyl or $C_3$–$C_6$-alkynyl, $R^2$ is $C_1$–$C_4$-alkyl, A is oxygen or $NOR^3$, $R^3$ being $C_1$–$C_4$-alkyl, $C_3$- or $C_4$-alkenyl, $C_3$- or $C_4$-alkynyl, $C_2$–$C_4$-haloalkyl; $C_2$–$C_4$-haloalkenyl or $C_2$–$C_4$-alkoxyalkyl, m and n are identical or different and independently of one another are each 0, 1 or 2, and x and y are identical or different and independently of one another are each 0 or 1, where A is oxygen, or a salt of said compound, is allowed to act on plants or their habitat.

7. A compound of the formula I as claimed in claim 1, wherein $R^1$ is ethyl, $R^2$ is n-propyl, A is $NOR^3$, $R^3$ is ethyl, allyl or 1-chloroprop-1-en-3-yl, X is = 0 or 1, Y is 0 or 1 and n is 0.

## Revendications

1. Dérivés de cyclohexenone de la formule I

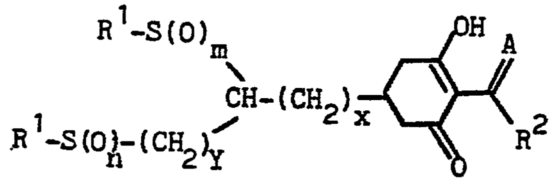

(I),

dans laquelle
$R^1$ représente alkyle en $C_1$–$C_{18}$, alcoxyalkyle en $C_3$–$C_6$, alkylthioalkyle en $C_3$–$C_6$, di-alkylaminoalkyle en $C_3$–$C_6$, alcényle en $C_3$–$C_6$ ou alkinyle en $C_3$–$C_6$
$R^2$ alkyle en $C_1$–$C_4$
A oxygène ou le reste $NOR^3$, $R^3$ étant mis pour alkyle en $C_1$–$C_4$, alcényle en $C_3$–$C_4$, alkinyle en $C_3$–$C_4$, halogénoalkyle en $C_2$–$C_4$, halogénalcényle en $C_2$–$C_4$ ou alcoxyalkyle en $C_2$–$C_4$,
m et n sont identiques ou différents et représentent, indépendamment l'un de l'autre, 0, 1 ou 2 et
x et y sont identiques ou différents et représentent, indépendamment l'un de l'autre, 0 ou 1
ainsi que des sels de ces divers composés.

2. Dérivés de cyclohexenone de la formule I selon la revendication 1, caractérisés par le fait que m, n, x et y représentent chacun 0 et A le reste $NOR^3$.

3. Herbicide contenant un additif inerte et un dérivé de cyclohexenone de la formule I

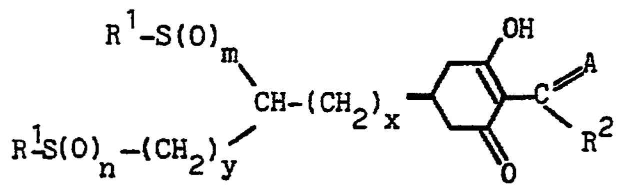

(I),

dans laquelle
$R^1$ représente alkyle en $C_1$–$C_{18}$, alcoxyalkyle en $C_3$–$C_6$, alkylthioalkyle en $C_3$–$C_6$, di-alkylaminoalkyle en $C_3$–$C_6$, alcényle en $C_3$–$C_6$ ou alkinyle en $C_3$–$C_6$
$R^2$ alkyle en $C_1$–$C_4$
A oxygène ou le reste $NOR^3$, $R^3$ étant mis pour alkyle en $C_1$–$C_4$, alcényle en $C_3$–$C_4$, alkinyle en $C_2$–$C_4$, halogénoalkyle en $C_2$–$C_4$, halogénalcényle en $C_2$–$C_4$ ou alcoxyalkyle en $C_2$–$C_4$,
m et n sont identiques ou différents et représentent, indépendamment l'un de l'autre, 0, 1 ou 2 et
x et y sont identiques ou différents et représentent, indépendamment l'un de l'autre, 0 ou 1
ou un sel de ce composé.

4. Procédé de lutte contre la croissance de plantes indésirables, caractérisé par le fait qu'on traite les plantes indésirables, ou les surfaces à maintenir exemptes de la croissance des plantes indésirables, avec une quantité efficace du point de vue herbicide d'un dérivé de cyclohexenone de la formule I

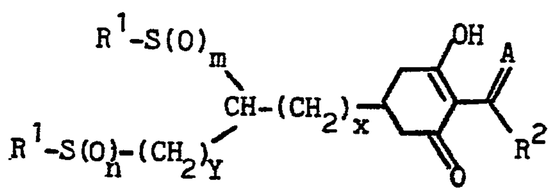

(I),

dans laquelle
$R^1$ représente alkyle en $C_1$–$C_{18}$, alcoxyalkyle en $C_3$–$C_6$, alkylthioalkyle en $C_3$–$C_6$, di-alkylaminoalkyle en $C_3$–$C_6$, alcényle en $C_3$–$C_6$ ou alkinyle en $C_3$–$C_6$
$R^2$ alkyle en $C_1$–$C_4$
A oxygène ou le reste $NOR^3$, $R^3$ étant mis pour alkyle en $C_1$–$C_4$, alcényle en $C_3$–$C_4$, alkinyle en $C_3$–$C_4$, halogénoalkyle en $C_2$–$C_4$, halogénalcényle en $C_2$–$C_4$ ou alcoxyalkyle en $C_2$–$C_4$,
m et n sont identiques ou différents et représentent, indépendamment l'un de l'autre, 0, 1 ou 2 et
x et y sont identiques ou différents et représentent, indépendamment l'un de l'autre, 0 ou 1
ou un sel de ce composé.

5. Moyen de régulation de la croissance des plantes contenant un additif inerte et un dérivé de cyclohexenone de la formule I

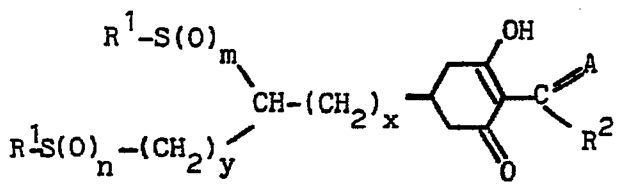
(I),

dans laquelle
$R^1$ représente alkyle en $C_1$–$C_{18}$, alcoxyalkyle en $C_3$–$C_6$, alkylthioalkyle en $C_3$–$C_6$, di-alkylaminoalkyle en $C_3$–$C_6$, alcényle en $C_3$–$C_6$ ou alkinyle en $C_3$–$C_6$
$R^2$ alkyle en $C_1$–$C_4$
A oxygène ou le reste $NOR^3$, $R^3$ étant mis pour alkyle en $C_1$–$C_4$, alcényle en $C_3$–$C_4$, alkinyle en $C_3$–$C_4$, halogénoalkyle en $C_2$–$C_4$, halogénalcényle en $C_2$–$C_4$ ou alcoxyalkyle en $C_2$–$C_4$,
m et n sont identiques ou différents et représentent, indépendamment l'un de l'autre, 0, 1 ou 2 et
x et y sont identiques ou différents et représentent, indépendamment l'un de l'autre, 0 ou 1
ou un sel de ce composé.

6. Procédé de régulation de la croissance des plantes caractérisé par le fait qu'on fait agir sur les plantes, ou leur biotope, une quantité efficace d'un dérivé de cyclohexenone de la formule I

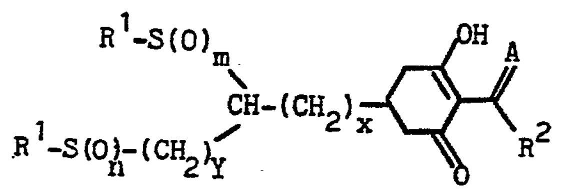
(I),

dans laquelle
$R^1$ représente alkyle en $C_1$–$C_{18}$, alcoxyalkyle en $C_3$–$C_6$, alkylthioalkyle en $C_3$–$C_6$, di-alkylaminoalkyle en $C_3$–$C_6$, alcényle en $C_3$–$C_6$ ou alkinyle en $C_3$–$C_6$
$R^2$ alkyle en $C_1$–$C_4$
A oxygène ou le reste $NOR^3$, $R^3$ étant mis pour alkyle en $C_1$–$C_4$, alcényle en $C_3$–$C_4$, alkinyle en $C_3$–$C_4$, halogénoalkyle en $C_2$–$C_4$, halogénalcényle en $C_2$–$C_4$ ou alcoxyalkyle en $C_2$–$C_4$,
m et n sont identiques ou différents et représentent, indépendamment l'un de l'autre, 0, 1 ou 2 et
x et y sont identiques ou différents et représentent, indépendamment l'un de l'autre, 0 ou 1
ou un sel de ce composé.

7. Composé de formule I selon la revendication 1, caractérisé par le fait que
$R^1$ représente éthyle
$R^2$ représente n-propyle
A représente $NOR^3$
$R^3$ représente ethyle, allyle ou 1-chloroprop-1-en-3-yle
X représente 0 ou 1
Y représente 0 ou 1 et
n représente 0.